(19) Europäisches Patentamt
European Patent Office
Office européen des brevets

(11) **EP 2 009 048 A2**

(12) **EUROPEAN PATENT APPLICATION**

(43) Date of publication:
**31.12.2008 Bulletin 2009/01**

(51) Int Cl.:
***C08L 7/00*** *(2006.01)*  ***C08L 15/00*** *(2006.01)*
***C08K 5/09*** *(2006.01)*  ***B60C 1/00*** *(2006.01)*

(21) Application number: **08011064.6**

(22) Date of filing: **18.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.06.2007 JP 2007168699**
**27.06.2007 JP 2007168700**
**27.06.2007 JP 2007168701**
**27.06.2007 JP 2007168702**
**02.07.2007 JP 2007173946**
**02.07.2007 JP 2007174018**

(71) Applicant: **Sumitomo Rubber Industries, Ltd.**
**Kobe-shi,**
**Hyogo-ken (JP)**

(72) Inventors:
• **Ishida, Hirokazu**
**Kobe-shi**
**Hyoho 651-0072 (JP)**
• **Hirayama, Michio**
**Kobe-shi**
**Hyoho 651-0072 (JP)**

(74) Representative: **Manitz, Finsterwald & Partner GbR**
**Postfach 31 02 20**
**80102 München (DE)**

(54) **Rubber composition for tire, tire member and tire**

(57) A rubber composition for a tire comprising a rubber component containing at least one of a natural rubber and an epoxidized natural rubber, not less than 15 parts by mass of silica based on 100 parts by mass of the rubber component, and not less than 0.5 part by mass of calcium stearate based on 100 parts by mass of the rubber component, a tire member made using the rubber composition for a tire, and a tire made using the tire member.

FIG.4

**Description**

This nonprovisional application is based on Japanese Patent Applications Nos. 2007-168699, 2007-168700, 2007-168701, and 2007-168702 filed on June 27, 2007, and Nos. 2007-173946 and 2007-174018 filed on July 2, 2007, with the Japan Patent Office, the entire contents of which are hereby incorporated by reference.

BACKGROUND OF THE INVENTION

Field of the Invention

The present invention relates to a rubber composition for a tire, a tire member and a tire.

Description of the Background Art

In general, for example, in a tire for a passenger automobile, it is required to realize lower fuel consumption of a passenger automobile by reducing rolling resistance of a tire in view of environmental problems and economy. In addition, durability of a tire at long term running of a passenger automobile is also required.

In such a tire for a passenger automobile, generally, as a reinforcing material, for example, a steel cord and an organic fiber cord are used, and the organic fiber cord is frequently used in a carcass cord constituting a carcass of the tire. When the organic fiber cord is used in the carcass cord, in order to enhance adhesion properties between the carcass cord and a rubber composition covering the carcass cord, covering of the carcass cord with a rubber composition for covering a carcass cord is widely performed (e.g. see Japanese Patent Laying-Open No. 2006-328194).

Further, in such a tire for a passenger automobile, from a viewpoint of safety at running of an automobile, it is required that a tread of the tire has excellent gripping performance. However, low fuel consumption of a passenger automobile and gripping performance are mutually exclusive performance.

Therefore, realization of both of lower fuel consumption of a passenger automobile and gripping performance by constructing a tread of the tire into a bilayered structure of a cap tread/a base tread, forming a superficial part contacting with a tread surface such as a cap tread from a rubber composition enhancing a gripping force, and forming an inner layer part such as a base tread of a rubber composition giving low heat generation properties, is proposed (e.g. see Japanese Patent Laying-Open No. 2006-199784, paragraph [0003] etc.).

In addition, in recent years, with improvement in performance of an automobile and development of a road network, excellent operation safety is required in the tire for an automobile. In order to obtain excellent operation stability in the tire, it is necessary that a hardness of a bead apex of the tire is increased, and a rubber composition for a bead apex incorporating a large amount of carbon black has been conventionally developed (e.g. see Japanese Patent Laying-Open No. 2004-339287).

However, it is possible to increase a hardness of the bead apex by incorporating a large amount of carbon black into a rubber composition for a bead apex. However, there was a problem that, due to increase in a loss tangent (tanδ), the bead apex becomes easy to generate heat during a running of a vehicle, durability of the bead apex is deteriorated by heat aging, and rolling resistance of the tire (resistance working in a direction opposite to a traveling direction of a tire at rotation of a tire) of the tire is increased.

In addition, the bead apex is disposed after a rubber composition for a bead apex is molded into a prescribed shape and, when molding processability of the rubber composition for a bead apex is poor, there was a problem that a shape of a bead apex varies, consequently, the property of the bead apex also varies.

In addition, a currently commercially available tire is a half or more of its total mass is constituted with components derived from a petroleum source. For example, in a general radial tire for a passenger automobile, as a component derived from a petroleum source, about 20% of a synthetic rubber, about 20% of carbon black and, additionally, an aroma oil and a synthetic fiber are contained based on a total mass of the tire, and thus 50% or more of a total mass of the tire is constituted with components derived from a petroleum source.

However, in recent years, an environmental problem has been emphasized, and regulation of suppressing discharge of $CO_2$ is intensified. In addition, since a petroleum source is definite, and a supply amount is reduced year by year, it is predicted that the petroleum price is increased in future, and there is limitation on use of components derived from a petroleum source. Further, in the case of facing depletion of a petroleum source, it is predicted that it becomes difficult to produce a tire constituted with such a component derived from a petroleum source.

For this reason, an ecological tire containing, as a main component, components not derived from a petroleum source (components derived from source other than petroleum) is paid an attention (e.g. see Japanese Patent Laying-Open No. 2003-063206 etc.).

## SUMMARY OF THE INVENTION

In the above ecological tire, from a viewpoint that a used amount of components derived from a petroleum source is suppressed, it is preferable to use as much as components derived from a source other than a petroleum, regarding a tire member such as a carcass, a base tread, a bead apex, a side wall constituting a side of a tire, a clinch which is disposed from a bottom to side of a bead wire in order to reduce generation of abrasion between a rim of tire and the bead wire, and a jointless band (hereinafter, referred to "JLB") disposed on a belt of the tire.

Accordingly, an object of the present invention is provided a rubber composition for a tire which can suppress a used amount of a material derived from a petroleum source, a tire member and a tire, both produced using the rubber composition for a tire.

In addition, another object of the present invention is to provide a rubber composition for covering a carcass cord which can suppress a used amount of a material derived from a petroleum source and, at the same time, can make rolling resistance of a tire and durability of a tire excellent.

In addition, an another object of the present invention is to provide a rubber composition for a base tread which can suppress a used amount of a material derived from a petroleum source and, at the same time, can make rolling resistance of a tire and durability of a tire excellent.

In addition, another object of the present invention is to provide a rubber composition for a side wall which can suppress a used amount of a component derived from a petroleum source and, at the same time, is good in processability at unvulcanization, and can suppress a rubber strength after heat aging can be suppressed low after vulcanization.

In addition, another object of the present invention is to provide a rubber composition for a clinch of a tire which can suppress a used amount of a component derived from a petroleum source and, at the same time, is better in processability at unvulcanization, and can realize a rubber having high abrasion resistance and a high strength after vulcanization.

In addition, another object of the present invention is to provide a rubber composition for JLB which can suppress a used amount of a component derived from a petroleum source and, at the same time, can suppress reduction in a rubber strength due to heat aging of JLB, and can improve adhesion properties between a rubber and a cord.

In addition, another object of the present invention is to provide a rubber composition for a bead apex which can suppress a used amount of a component derived from a petroleum source and, at the same time, is excellent molding processability, and can increase heat aging resistance and a hardness of a bead apex after vulcanization.

The present invention is a rubber composition for a tire, comprising a rubber component containing at least one of a natural rubber and an epoxidized natural rubber, and 15 parts by mass or more of silica based on 100 parts by mass of the rubber component, and 0.5 part by mass or more of calcium stearate based on 100 parts by mass of the rubber component.

In addition, the rubber composition for a tire of the present invention is a rubber composition for covering a carcass cord, wherein a content of silica is not less than 60 parts by mass and not more than 80 parts by mass based on 100 parts by mass of the rubber component, a content of calcium stearate is not less than 1 part by mass and not more than 10 parts by mass based on 100 parts by mass of the rubber component, and the composition may further comprise not less than 1 part by mass and not more than 15 parts by mass of the rubber component of a silane coupling agent based on 100 parts by mass.

In addition, the rubber composition for a tire of the present invention is a rubber composition for a base tread, wherein a content of silica is not less than 25 parts by mass and not more than 80 parts by mass based on 100 parts by mass of the rubber component, a content of calcium stearate is not less than 1 part by mass and not more than 10 parts by mass based on 100 parts by mass of the rubber component, the composition may further contain not less than 1 part by mass and not more than 15 parts by mass of a silane coupling agent based on 100 parts by mass of the rubber component.

In addition, the rubber composition for a tire of the present invention is a rubber composition for a side wall, wherein a content of silica is not less than 15 parts by mass and not more than 60 parts by mass based on 100 parts by mass of the rubber component, and a content of calcium stearate may be not less than 2 parts by mass based on 100 parts by mass of the rubber component.

In addition, the rubber composition for a tire of the present invention is a rubber composition for a clinch, wherein a content of silica is not less than 60 parts by mass based on 100 parts by mass of the rubber component, and a content of calcium stearate may be not less than 2 parts by mass and not more than 10 parts by mass based on 100 parts by mass of the rubber component.

In addition, the rubber composition for a tire of the present invention is a rubber composition for JLB, wherein a content of silica is not less than 40 parts by mass based on 100 parts by mass of the rubber component, and a content of calcium stearate may be not less than 0.5 part by mass and not more than 10 parts by mass based on 100 parts by mass of the rubber component.

In addition, a rubber composition for a tire of the present invention is a rubber composition for a bead apex, wherein a content of silica is not less than 60 parts by mass based on 100 parts by mass of the rubber component, and a content of calcium stearate may be not less than 2 parts by mass and not more than 10 parts by mass based on 100 parts by mass of the rubber component.

In addition, the present invention is a tire member formed using the rubber composition for a tire.

Further, the present invention is a tire produced using the tire member.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic perspective of one example of a part of a carcass made using the rubber composition for covering a carcass cord of the present invention;

Fig. 2 is a schematic cross-sectional view for illustrating a part of production steps of one example of a process for producing a tire using a carcass made using the rubber composition for covering a carcass cord of the present invention;

Fig. 3 is a schematic cross-sectional view for illustrating other part of production steps of one example of a process for producing a tire using a carcass made using the rubber composition for covering a carcass cord of the present invention;

Fig. 4 is a schematic cross-sectional view of an upper part of one example of a tire made using a carcass made using the rubber composition for covering a carcass cord of the present invention;

Fig. 5 is a schematic view for illustrating an interior structure of other one example of a tire made using a carcass made using the rubber composition for covering a carcass cord of the present invention;

Fig. 6 is a schematic cross-sectional view of a left upper half of one example of the tire of the present invention;

Fig. 7 is a schematic cross-sectional view of a left upper half of one example of the tire of the present invention;

Fib. 8 is a schematic cross-sectional view of a left upper half of one example of the tire of the present invention;

Fib. 9 is a schematic perspective of one example of JLB produced using the rubber composition of the present invention;

Fig. 10 is a schematic cross-sectional view for illustrating a part of steps of one example of a process for producing a tire using JLB shown in Fig. 9;

Fig. 11 is a schematic cross-sectional view for illustrating other part of steps of one example of a process for producing a tire using JLB shown in Fig. 9;

Fig. 12 is a schematic extended plane view showing a positional relationship between JLB and a belt after JLB shown is Fig. 1 is wound;

Fig. 13 is a schematic cross-sectional view of an upper part of one example of the tire of the present invention;

Fig. 14 is a schematic view for illustrating an interior structure of other one example of the tire of the present invention;

Fig. 15 is a schematic cross-sectional view for illustrating a part of production steps of one example of a process for producing a tire using a bead apex made of the rubber composition of the present invention;

Fig. 16 is a schematic cross-sectional view for illustrating other part of production steps of one example of a process for producing a tire using a bead apex made of the rubber composition of the present invention;

Fig. 17 is a schematic cross-sectional view of an upper part of one example of a tire made using a bead apex made of the rubber composition of the present invention; and

Fig. 18 is a schematic extended cross-sectional view of a vicinity of a bead apex of the tire shown in Fig. 17.

DESCRIPTION OF THE PREFERRED EMBODIMENTS

Embodiments of the present invention will be described below. In the drawings of the present invention, the same difference symbol represents the same part or a corresponding part.

<Rubber component of rubber composition for tire>

In the present invention, as a rubber component, a rubber which is any one of a natural rubber and an epoxidized natural rubber, or a mixed rubber obtained by mixing both of a natural rubber and an epoxidized natural rubber is used. Thus, by using a rubber component containing any one of a natural rubber and an epoxidized natural rubber as a rubber component, a used amount of a component derived from a petroleum source can be reduced.

Herein, as the natural rubber, for example, a natural rubber containing 1, 4 cis-polyisoprene as a main component can be used, but a rubber obtained by appropriately mixing 1, 4-trans-polyisoprene into 1, 4-cis-polyisoprene may be used. As such a natural rubber, previously known natural rubbers can be used and, a rubber which is general in the tire industry such as RSS#3 and TSR20 can be used.

As the epoxidized natural rubber, conventionally known ones can be used and, for example, a commercially available epoxidized natural rubber, or a rubber obtained by epoxidizing a natural rubber can be used.

Herein, as the commercially available epoxidized natural rubber, for example, ENR25 having an epoxidization rate of 25% and ENR50 having an epoxidizaion rate of 50% available from Kumplan Guthrie Berhad can be used.

In addition, as a method of epoxidizing a natural rubber, a method such as a chlorohydrin method, a direct oxidation method, an alkylhydroperoxide method and a peracid can be used. Herein, as the peracid method, for example, a method of reacting the natural rubber with an organic peracid such as peracetic acid and performic acid can be used.

In the present invention, as far as at least one of the natural rubber and the epoxidized natural rubber is contained in the rubber component, at least one kind of other rubber such as a butadiene rubber (BR), a styrene butadiene rubber (SBR), an isoprene rubber (IR), and a butyl rubber (IIR) may be contained.

<Silica of rubber composition for tire>

In the rubber composition for a tire of the present invention, silica is contained at 15 parts by mass or more based on 100 parts by mass of the rubber component. By adapting such a construction, since a used amount of carbon black as a filler can be reduced, a used amount of a component derived from a petroleum source can be reduced and, at a same time, there is a tendency that the sufficient reinforcing effect due to silica can be obtained. As silica, conventionally known ones such as anhydrous silica and/or hydrous silica can be used.

<Calcium stearate of rubber composition for tire>

In addition, in the rubber composition for a tire of the present invention, calcium stearate is contained at 0.5 part by mass or more based on 100 parts by mass of the rubber component. As described above, in the present invention, since silica as a filler is contained at 15 parts by mass or more based on 100 parts by mass of the rubber component, there is a possibility that processability unvulcanization is deteriorated, and a strength of a rubber after vulcanization is reduced due to aging, but by containing calcium stearate at 0.5 part by mass or more based on 100 parts by mass of the rubber component, there is a tendency that processability of a rubber component for a tire at unvulcanization can be better.

<Other components of rubber composition for tire>

In the rubber composition for a tire of the present invention, in addition to the aforementioned components, for example, various components such as carbon black, a silane coupling agent, an oil, a wax, an aging preventing agent, stearic acid, zinc oxide, sulfur and a vulcanization accelerator which are generally used in the tire industry may be appropriately incorporated.

<Carbon black of rubber composition for tire>

The rubber composition for a tire of the present invention may contain the conventionally known carbon black derived from a petroleum source. Herein, from a viewpoint that a used amount component derived from a petroleum source is reduced, a content of carbon black is preferably 25 parts by mass or less, more preferably 5 parts by mass or less based on 100 parts by mass of the rubber component, and most preferably no carbon black is contained.

As carbon black, the conventionally known carbon black such as SAF, ISAF, HAF and FEF can be used.

<Silane coupling agent of rubber composition for tire>

In addition, in the rubber composition for a tire of the present invention, a silane coupling agent may be contained. Herein, as the silane coupling agent, conventionally known ones can be used, and examples include sulfide-based silane coupling agents such as bis(3-triethoxysilylpropyl) tetrasulfide, bis(2-triethoxysilylethyl) tetrasulfide, bis(3-trimethoxysilylpropyl) tetrasulfide, bis(2-trimethoxysilylethyl) tetrasulfide, bis(3-triethoxysilylpropyl) trisulfide, bis(3-trimethoxysilylpropyl) trisulfide, bis(3-triethoxysilylpropyl) disulfide, bis(3-trimethoxysilylpropyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropyl methacrylate monosulfide, and 3-trimethoxysilylpropyl methacrylate monosulfide, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane, vinyl-based silane coupling agents such as vinyltriethoxysilane, and vinyltrimethoxysilane, amino-based silane coupling agents such as 3-aminopropyltriethoxysilane, 3-aminopropyltrimethoxysilane, 3-(2-aminoethyl) aminopropyltriethoxysilane, and 3-(2-aminoethyl)aminopropyltrimethoxysilane, glycidoxy-based silane coupling agents, such as γ-glycidoxypropyltriethoxysilane, γ-glycidoxypropyltrimethoxysilane, γ-glycidoxypropylmethyldiethoxysilane, and γ-glycidoxypropylmethyldimethoxysilane, nitro-based silane coupling agents such as 3-nitropropyltrimethoxysilane, and 3-nitropropyltriethoxysilane, and chloro-based silane coupling agents such as 3-chloropropyltrimethoxysilane, 3-chloropropyltriethoxysilane, 2-chloroethyltrimethoxysilane, and 2-chloroethyltriethoxysilane. The silane coupling agents may be used alone, or may be used by combining two or more kinds. When the silane coupling agent is incorporated, an incorporation amount of the silane coupling agent can be appropriately set.

<Oil of rubber composition for tire>

As the oil, the conventionally known one can be used and, for example, a process oil, a vegetable fat or oil, or a mixture thereof can be used. As the process oil, for example, a paraffin-based process oil, a naphthalene-based process oil, and an aromatic-based process oil can be used. As the vegetable fat or oil, for example, a castor oil, a cottonseed oil, a linseed oil, a soybean oil, a palm oil, a coconut oil, a peanut oil, rosin, a pine oil, a pine tar, a tall oil, a corn oil, a rice oil, a dyer's saffron oil, a sesame oil, an olive oil, a sunflower oil, a palm kernel oil, a camellia oil, a jojoba oil, a macadamia nut oil, a sunflower oil, and a paulownia oil can be used.

From a viewpoint that a used amount of a component derived from a petroleum source is reduced, it is preferable to use the vegetable fat or oil as the oil.

<Wax of rubber composition for tire>

As the wax, conventionally known ones can be used and, for example, the previously known natural based wax, and petroleum based wax can be used. From a viewpoint that a used amount of a component derived from a petroleum source is reduced, it is preferable to use a natural-based wax as a wax.

<Aging preventing agent of rubber composition for tire>

As the aging preventing agent, conventionally known ones can be used and, for example, an aging preventing agent such as amine-based agent, a phenol-based agent, an imidazole-based agent, and a carbamic acid metal salt can be used.

<Stearic acid of rubber composition for tire>

As stearic acid, conventionally known ones can be used and, for example, stearic acid manufactured by Nippon Oil & Fats Co., Ltd. can be used.

<Zinc oxide of rubber composition for tire>

As zinc oxide, conventionally known ones can be used and, for example, Zinc White No. 1 manufactured by MITSUI MINING & SMELTING CO., LTD. can be used.

<Sulfur of rubber composition for tire>

As sulfur, conventionally known ones can be used and, for example, powdery sulfur manufactured by Tsurumi Chemical Industry Co., Ltd., Crystex HSOT20 manufactured by Flexis and Sunfel EX manufactured by SANSHIN CHEMICAL INDUSTRY CO., LTD. can be used.

<Vulcanization accelerator of rubber composition for tire>

As the vulcanization accelerator, conventionally known ones can be used and, for example, a vulcanization accelerator containing at least one of sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators can be used. As the sulfenamide amide vulcanization accelerator, sulfenamide-based compounds such as CBS (N-cyclohexyl-2-benzothiazylsulfenamide), TBBS (N-tert-butyl-2-benzothiazylsulfenamide), N,N-dicyclohexyl-2-benzothiazylsulfenamide, N-oxydiethylene-2-benzothiazylsulfenamide, and N,N-diisopropyl-2-benzothiazolesulfenamide can be used. As the thiazole-based vulcanization accelerator, thiazole-based compounds, such as MBT (2-mercaptobenzothiazole), MBTS (dibenzothiazyl disulfide), a sodium salt, a zinc salt, a copper salt, or a cyclohexylamine salt of 2-mercaptobenzothiazole, 2-(2,4-dinitrophenyl)mercaptobenzothiazole, and 2-(2,6-diethyl-4-morpholinethio)benzothiazole can be used. As the thiuram-based vulcanization accelerator, thiuram based compounds such as TMTD (tetramethylthiuram disulfide), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, and pentamethylenethiuram tetrasulfide can be used. As the thiourea-based vulcanization accelerator, thiourea compounds such as thiacarbamide, diethylthiourea, dibutylthiourea, trimethylthiourea, and diorthotolylthiourea can be used. As the guanidine-based vulcanization accelerator, guanidine-based compounds such as diphenylguanidine, diorthotolylguanidine, triphenylguanidine, orthotolylbiguanide, and diphenylguanidine phthalate can be used. As the dithiocarbamic acid-based vulcanization accelerator, dithiocarbamic acid-based compounds such as zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithocarbamate, a complex salt of zinc pentamethylenedithiocarbamate and piperidine, zinc hexadecyl (or octadecyl) isopropyldithiocarbamate, zinc dibenzyldithiocarbamate, sodium diethyldithiocarbamate, pentamethylenedithiocarbamic acid piperidine, selenium dimethyldithiocarbamate, tellurium diethyldithiocarbamate, and cadmium diamyldithiocarbamate can be used. As the aldehyde-amine-based or aldehyde-ammonia-based vulcanization accelerator, aldehyde- amine-based or aldehyde-ammonia-based compounds such as an acetoaldehyde-aniline reaction product, a butylaldehyde-aniline condensate, hexamethylenetetramine and an acetoaldehyde-ammonia reaction product can be used. As the imidazoline-based vulcanization accelerator, imidazoline-based compounds such as 2-mercaptoimidazoline can be used. As the xanthate-based vulcanization accelerator, xanthate- based compounds such as zinc dibutylxanthate can be used. These vulcanization accelerators may be used alone, or may be used by combining two or more kinds.

<Tire member>

By processing the tire rubber composition of the present invention into a predetermined shape, for example, extrusion processing in the unvulcanized state, various tire members of the present invention constituting a tire can be formed.

<Tire>

By arranging the thus formed tire member of the present invention at a predetermined position to make a green tire and, thereafter, a rubber composition constituting a tire member of a green tire is vulcanized, thereby, the tire of the present invention can be produced.

<Carcass cord covering rubber composition>

The rubber composition for a tire of the present invention can be used as a rubber composition for covering a carcass cord.
The rubber composition for covering a carcass cord of the present invention has a construction containing not less than 60 parts by mass and not more than 80 parts by mass of silica, not less than 1 part by mass and not more than 10 parts by mass of calcium stearate, and not less than 1 part by mass and not more than 15 parts by mass of a silane coupling agent based on 100 parts by mass of the rubber component.

<Silica of carcass cord covering rubber composition>

In the rubber composition for covering a carcass cord of the present invention, not less than 60 parts by mass and not more than 80 parts by mass of silica is contained based on 100 parts by mass of the rubber component. Herein, when a content of silica is not less than 60 parts by mass based on 100 parts by mass of the rubber component, there is a tendency that a used amount of a material derived from petroleum can be suppressed. When the content is not more than 80 parts by mass, there is a tendency that rolling resistance of a tire made using the rubber composition for covering a carcass cord of the present invention can be made better. As silica, the same silica as that for the rubber composition for a tire can be used.
In addition, from a viewpoint that extrusion processability is made better (shrinkage is suppressed), it is more preferable that a content of silica is not less than 65 parts by mass based on 100 parts by mass of the rubber component.
In addition, from a viewpoint that a Mooney viscosity is not increased, it is more preferable that a content of silica is not more than 75 parts by mass based on 100 parts by mass of the rubber component.

In addition, a nitrogen adsorption specific surface area by a BET method (hereinafter, referred to as "BET specific surface area") of silica is preferably not less than 70 m$^2$/g, more preferably not less than 80 m$^2$/g. When a BET specific surface area of silica is not less than 70 m$^2$/g, particularly not less than 80 m$^2$/g, there is a tendency that the reinforcing effect by silica is obtained more sufficiently.

In addition, a BET specific surface area of silica is preferably 250 m$^2$/g, more preferably not more than 240 m$^2$/g. When a BET specific surface area of silica is not more than 250 m$^2$/g, particularly not more than 240 m$^2$/g, there is a tendency that increase in a Mooney viscosity of the rubber composition for covering a carcass cord of the present invention can be suppressed, and processability upon topping of the rubber composition for covering a carcass cord of the present invention on a carcass cord becomes better.

In addition, a BET specific surface area of silica can be measured by the method according to ASTM-D-4820-93.

<Silane coupling agent of carcass cord covering rubber composition>

In the rubber composition for covering a carcass cord of the present invention, not less than 1 part by mass and not more than 15 parts by mass of the silane coupling agent is contained based on 100 parts by mass of the rubber component. When a content of the silane coupling agent is not less than 1 part by mass based on 100 parts by mass of the rubber component, there is a tendency that a rubber strength after vulcanization is improved and durability of a tire is improved and, when the content is not more than 15 parts by mass, there is a tendency that a rubber strength after vulcanization does not become too high, and rolling resistance of a tire can be made better. As the silane coupling agent, the same silane coupling agent as that for the rubber composition for a tire can be used.

In addition, a content of the silane coupling agent is more preferably not less than 2 parts by mass based on 100 parts by mass of the rubber component. When a content of the silane coupling agent is not less than 2 parts by mass based on 100 parts by mass of the rubber component, there is a tendency that the effect of incorporation of the silane coupling agent is sufficiently obtained.

In addition, it is more preferable that a content of the silane coupling agent is not more than 14 parts by mass based on 100 parts by mass of the rubber component. When a content of the silane coupling agent is not more than 14 parts by mass based on 100 parts by mass of the rubber component, there is a tendency that the cost can be suppressed and, at the same time, the effect of incorporation of the silane coupling agent is sufficiently obtained.

<Calcium stearate of carcass cord covering rubber composition>

In the rubber composition for covering a carcass cord of the present invention, not less than 1 part by mass and not more than 10 parts by mass of calcium stearate is contained based on 100 parts by mass of the rubber component. When a content of calcium stearate is not less than 1 part by mass and not more than 10 parts by mass based on 100 parts by mass of the rubber component, there is a tendency that processability of the rubber composition covering carcass cord of the present invention can be made better and, at the same time, a rubber strength after vulcanization can be made excellent. Herein, as calcium stearate, the same calcium stearate as that for the rubber composition for a tire can be used.

In addition, it is more preferable that a content of calcium stearate is not less than 2 parts by mass based on 100 parts by mass of the rubber component. When a content of calcium stearate is not less than 2 parts by mass based on 100 parts by mass of the rubber component, there is a tendency that the effect of incorporation of calcium stearate is sufficiently obtained.

Further, it is more preferable that a content of calcium stearate is not more than 9 parts by mass based on 100 parts by mass of the rubber component. When a content of calcium stearate is not more than 9 parts by mass based on 100 parts by mass of the rubber component, there is a tendency that balance between rolling resistance and rubber strength is excellent.

<Carbon black of carcass cord covering rubber composition>

In the rubber composition for covering a carcass cord of the present invention, the previously known carbon black derived form a petroleum source may be contained and, from a viewpoint that a used amount of a material derived from a petroleum source is reduced, a content of carbon black is preferably not more than 25 parts by mass, more preferably not more than 5 parts by mass based on 100 parts by mass of the rubber component, most preferably no carbon black is contained. In addition, when carbon black is incorporated, the same carbon black as that for the rubber composition for a tire can be incorporated.

<Other component of carcass cord covering rubber composition>

In the rubber composition for covering a carcass cord of the present invention, in addition to the aforementioned materials, for example, various materials such as an oil, a wax, an aging preventing agent, stearic acid, zinc oxide, sulfur and a vulcanization accelerator which are generally used in the tire industry may be appropriately incorporated. In addition, when these components are incorporated, the same components as those for the rubber composition for a tire may be incorporated.

<Process for producing rubber composition for covering carcass cord>

The rubber composition for coveting a carcass cord of the present invention can be obtained by mixing the aforementioned materials by kneading the materials using a conventionally known open roll, Banbury mixer, press-type kneader or continuous kneader.

<Carcass made using rubber composition for covering carcass cord>

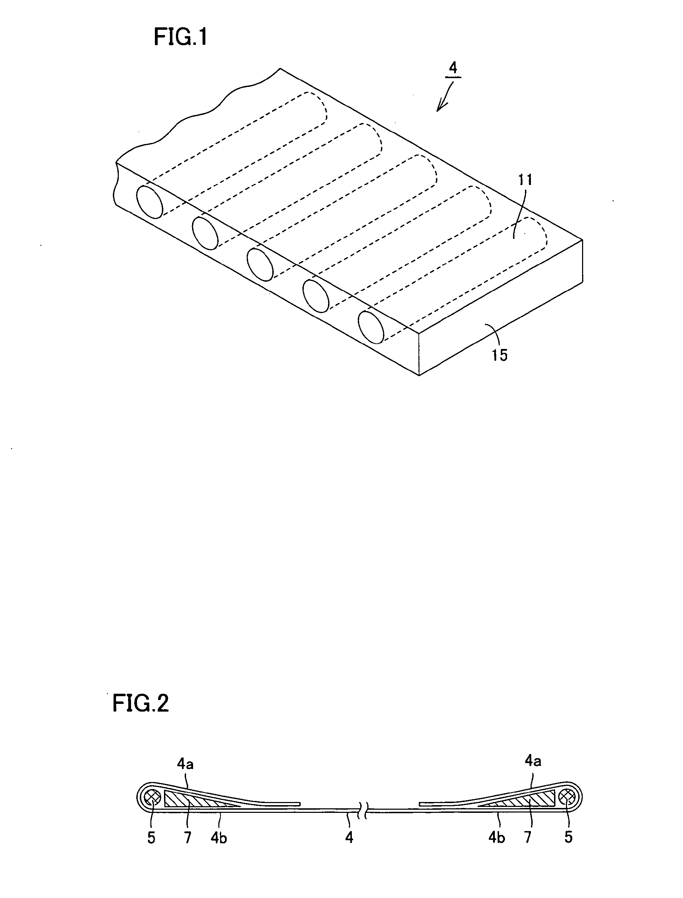

Fig. 1 shows a schematic perspective of one example of a part of a carcass made using the rubber composition for covering a carcass cord of the present invention. Herein, a carcass 4 has a construction that a plurality of carcass cords 11 are embedded in the sheet-like rubber composition for covering a carcass cord 15 of the present invention.

The carcass 4 made using the rubber composition for covering a carcass cord of the present invention can be made, for example, by first extending a plurality of carcass cords 11 to arrange parallel, and in this state, topping an unvulcanized rubber composition for covering a carcass cord 15 on an under the carcass cord.

In the present invention, as the carcass cord 11, conventionally known ones can be used and, for example, a filament made of an organic fiber or steel can be used.

<Tire made using carcass made using rubber composition for covering carcass cord>

One example of a process for producing a tire using a carcass made using the rubber composition for covering a carcass cord of the present invention will be described below.

First, the above-made carcass is annularly wound on an outer circumferential surface of a conventionally known drum roll.

Herein, the carcass can be made, for example, by topping the rubber composition for covering a carcass cord of the present invention on upper and lower surfaces of a plurality of carcass cords made of a filament such as polyester to embed a plurality of carcass cords in the rubber composition for covering a carcass cord of the present invention.

Then, as shown in a schematic cross-sectional view of Fig. 2, a bead wire 5 obtained by bundling a plurality of wires into an annulus is hammered on an outer circumferential surface of both ends of an annulus carcass 4 and, at the same time, a bead apex 7 is mounted, both ends of the carcass 4 are turned up inwardly to wrap the bead wire 5 and the bead apex 7 between a turning up part 4a and a non-turning up part 4b of the carcass 4.

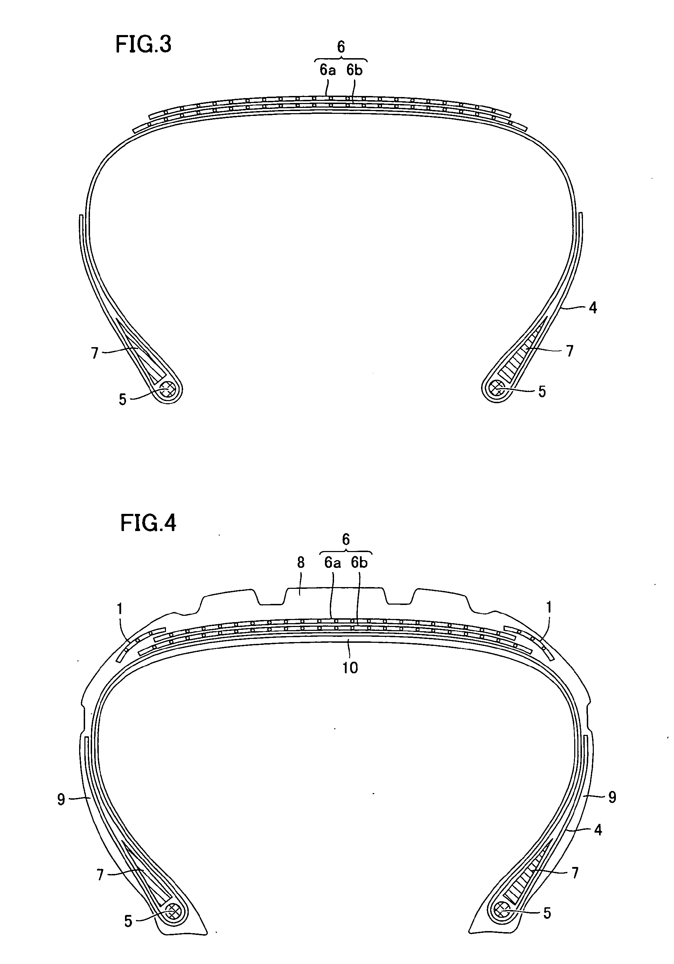

Subsequently, as shown in a schematic cross-sectional view of Fig. 3, the carcass 4 in which the bead wire 5 and the bead apex 7 are wrapped into an end part is inflated into a toroid. Thereafter, the first belt 6b and the second belt 6a are laminated in this order on an outer circumferential surface at a center of the carcass 4, thereby a belt 6 is formed.

Thereafter, a green tire is made by a conventionally known method, and the made green tire is disposed in a mold for molding a tire, and vulcanized, thereby, an unvulcanized rubber composition constituting each site of a tread, a side wall, a belt, JLB, an inner liner, a carcass, and a bead apex of the green tire is vulcanized to produce a tire.

In the foregoing, explanation of a step of mounting a tread, a side wall, JLB, and an inner liner is omitted.

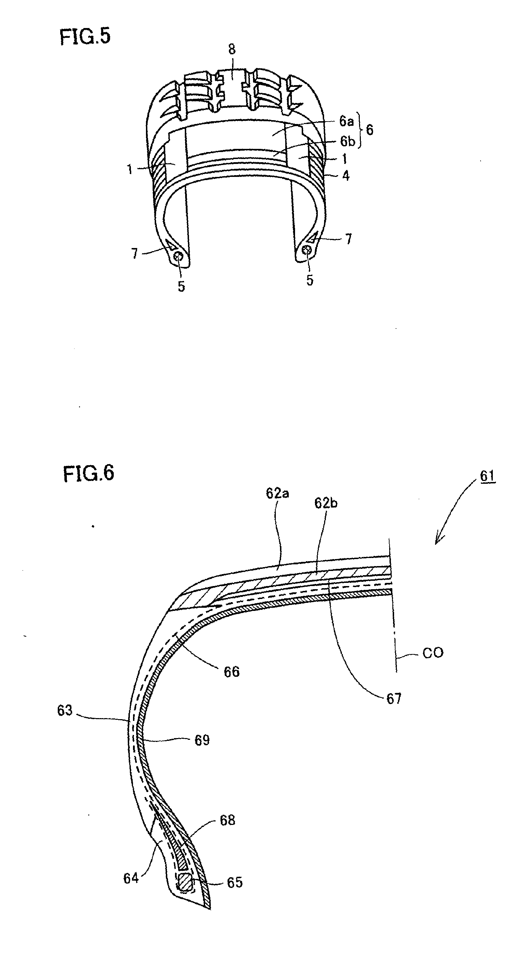

A schematic cross-sectional view of an upper part of one example of the above-produced tire is shown in Fig. 4. In addition, Fig. 5 shows a schematic view for illustrating an inner structure in other example of a tire made using a carcass made using a rubber composition for covering a carcass cord of the present invention.

Herein, as shown in Fig. 4 and Fig. 5, in the above-produced tire, a side wall 9 is formed on the site surface of the carcass 4 in which the bead wire 5 and the bead apex 7 are wrapped at both ends.

In addition, in a center of an outer circumferential surface of the carcass 4, a belt 6 obtained by laminating a first belt layer 6b and a second belt layer 6a in this order is mounted and, at the same time, JLB 1 is mounted so as to cover an end of the belt 6, and a tread 8 serving as an earth part of the tire is formed on an outer circumferential side of the belt 6 and JLB 1. In addition, in an inner circumferential surface of the carcass 4, an inner liner 10 is provided in order to suppress a gas such as an air in an interior carcass 4 from leaking to the outside.

Since the tire having the above construction is made using a carcass made using the rubber composition for covering a carcass cord of the present invention, rolling resistance of a tire and durability of a tire can be made excellent.

Further, since the tire having the above construction can suppress a used amount of a material derived from a petroleum source, an ecological tire which can consider the environment, and also can get ready for decrease in a supply amount of a petroleum in future can be obtained.

From a viewpoint of suppressing a used amount of a material derived from a petroleum source, it goes without saying that it is preferable to make sites of a tire other than a carcass using a material other than a material derived from a petroleum source at an amount which is as large as possible.

Although in the foregoing, the tire for a passenger automobile was exemplified, the present invention is not limited to it, but tires used for various vehicles such as a passenger automobile, a truck, a bus, and a heavy vehicle can be obtained.

<Rubber composition for base tread>

The aforementioned rubber composition for a tire of the present invention can be used, for example, as a rubber composition for a base tread.

The rubber composition for a base tread of the present invention has a construction containing not less than 25 parts by mass and not more than 80 parts by mass of silica, not less than 1 part by mass and not more than 10 parts by mass of calcium stearate, and not less than 1 part by mass and not more than 15 parts by mass of a silane coupling agent based on 100 parts by mass of the rubber component.

<Silica of rubber composition for base tread>

The rubber composition for a base tread of the present invention comprises not less than 25 parts by mass and not more than 80 parts by mass of silica based on 100 parts by mass of the rubber component. When a content of silica is not less than 25 parts by mass based on 100 parts by mass of the rubber component, there is a tendency that a used amount of a material derived from a petroleum can be suppressed, and there is a tendency that reinforcing of a tire due to silica becomes sufficient, a rubber strength is improved, and durability of a tire can be made better. On the other hand, when a content of silica is not more than 80 parts by mass based on 100 parts by mass of the rubber component, there is a tendency that rolling resistance of a tire made using the rubber composition for a base tread of the present invention can be made better. As silica, the same silica as that for the rubber composition for a tire can be used.

In addition, from a viewpoint that extrusion processability is made better (shrinkage is suppressed), a content of silica is preferably not less than 30 parts by mass, more preferably not less than 40 parts by mass based on 100 parts by mass of the rubber component.

In addition, from a viewpoint that a Mooney viscosity is not increased too much, a content of silica is preferably not more than 70 parts by mass, more preferably not more than 60 parts by mass based on 100 parts by mass of the rubber component.

In addition, a BET specific surface area of silica is preferably not less than 70 $m^2/g$, more preferably not less than 80 $m^2/g$. When a BET specific surface area of silica is not less than 70 $m^2/g$, particularly not less than 80 $m^2/g$, there is a tendency that the reinforcing effect by silica is obtained more sufficiently.

In addition, a BET specific surface area of silica is preferably not more than 250 $m^2/g$, more preferably not more than 240 $m^2/g$. When a BET specific surface area of silica is not more than 250 $m^2/g$, particularly not more than 240 $m^2/g$, there is a tendency that increase in a Mooney viscosity of the rubber composition for a base tread of the present invention can be suppressed, and processability of the rubber composition for a base tread of the present invention becomes better.

In addition, a BET specific surface area of silica can be measured by the method according to ASTM-D-4820-93.

<Silane coupling agent of rubber composition for base tread>

In the rubber composition for a base tread of the present invention, not less than 1 part by mass and not more than 15 parts by mass of a silane coupling agent is contained based on 100 parts by mass of the rubber component. When a content of the silane coupling agent is not less than 1 part by mass based on 100 parts by mass of the rubber component, there is a tendency that a rubber strength after vulcanization is improved and durability of a tire is improved and, when the content is not more than 15 parts by mass, there is a tendency that a rubber strength after vulcanization does not become too high, and rolling resistance of a tire can be made better. As the silane coupling agent, the same silane coupling agent as that for the rubber composition for a tire can be used.

In addition, a content of the silane coupling agent is more preferably not less than 2 parts by mass based on 100 parts by mass of the rubber component. When a content of the silane coupling agent is not less than 2 parts by mass based on 100 parts by mass of the rubber component, there is a tendency that the effect of incorporation of the silane coupling agent is sufficiently obtained, and abrasion resistance of a rubber after vulcanization becomes better.

In addition, it is more preferable that a content of the silane coupling agent is not more than 14 parts by mass based on 100 parts by mass of the rubber component. When a content of the silane coupling agent is not more than 14 parts by mass based on 100 parts by mass of the rubber component, there is a tendency that the cost can be suppressed and, at the same time, the effect of incorporation of the silane coupling agent is sufficiently obtained.

<Calcium stearate of rubber composition for base tread>

In the rubber composition for a base tread of the present invention, not less than 1 part by mass and not more than 10 parts by mass of calcium stearate is contained based on 100 parts by mass of the rubber component. When a content of calcium stearate is not less than 1 part by mass and not more than 10 parts by mass based on 100 parts by mass of the rubber component, there is a tendency that processability of the rubber composition for a base tread of the present invention can be made better and, at the same time, a rubber strength after vulcanization can be made excellent. Herein, as calcium stearate, the same calcium stearate as that for the rubber composition for a tire can be used.

In addition, it is more preferable that a content of calcium stearate is not less than 2 parts by mass based on 100 parts by mass of the rubber component. When a content of calcium stearate is not less than 2 parts by mass based on 100 parts by mass of the rubber component, there is a tendency that the effect of incorporation of calcium stearate is sufficiently obtained.

Further, it is more preferable that a content of calcium stearate is not more than 9 parts by mass based on 100 parts by mass of the rubber component. When a content of calcium stearate is not more than 9 parts by mass based on 100 parts by mass of the rubber component, there is a tendency that balance between rolling resistance and rubber strength becomes better.

<Carbon black of rubber composition for base tread>

In the rubber composition for a base tread of the present invention, conventionally known carbon black derived form a petroleum source may be contained and, from a viewpoint that a used amount of a material derived from a petroleum source is reduced, a content of carbon black is preferably not more than 25 parts by mass, more preferably not more than 5 parts by mass based on 100 parts by mass of the rubber component, most preferably no carbon black is contained. Herein, as carbon black, the same carbon black as that for the rubber composition for a tire can be used.

<Other component of rubber composition for base tread>

In the rubber composition for a base tread of the present invention, in addition to the aforementioned materials, for example, various materials such as an oil, a wax, an aging preventing agent, stearic acid, zinc oxide, sulfur and a vulcanization accelerator which are generally used in the tire industry may be appropriately incorporated. In addition, when these components are incorporated, the same components as those for the rubber composition for a tire may be incorporated.

<Process for producing rubber composition for base tread>

The rubber composition for a base tread of the present invention can be obtained by mixing the aforementioned materials by kneading the materials using a conventionally known open roll, Banbury mixer, press-type kneader or continuous kneader.

<Base tread made using rubber composition for base tread>

A base tread can be formed by extrusion-processing the rubber composition for a base tread of the present invention in the unvulcanized state.

<Tire made using base tread made using rubber composition for base tread>

A tire can be produced by making a green tire such as by arranging a base tread formed of the rubber composition for a base tread of the present invention, and other tire members at predetermined positions and, thereafter, vulcanizing the rubber composition constituting the tire members of the green tire.

Fig. 6 shows a schematic cross-sectional view of a left upper half of one example of the above-produced tire. Herein, a tire 61 comprises a cap tread 62a which is to be an earth surface of the tire 61, a base tread 62b which is situated inwardly in a tire radial direction of the cap tread 62a, one pair of side walls 63 constituting a side surface of the tire 61 extending inwardly in a tire radial direction from both ends of the base tread 62b, and a bead core 65 which is situated inwardly in a tire radial direction of each side wall 63. In addition, a carcass 66 is bridged between bead cores 65, 65 and, at the same time, a belt 67 is disposed on an outer side of this carcass 66 and on an inner side of the base tread 62b.

The carcass 66 can be formed of, for example, a rubber sheet in which a plurality of cords at an angle of, for example, 70° to 90° relative to tire equator CO (an imaginary line obtained by rotating, one time, a center of a width of an outer circumferential surface of the tire 1 in a circumferential direction of an outer circumferential surface of the tire 1) are embedded in the rubber composition. In addition, the carcass 66 is engaged by turning up from an inner side to an outer side of a tire axial direction around the bead core 65 from the base tread 62b via the side wall 63.

The belt 67 can be formed of a rubber sheet in which a plurality of cords at an angle of, for example, 40° or less relative to the tire equator CO are embedded in the rubber composition.

In addition, in the tire 61, JLB (not shown) for suppressing peeling of the belt 67 may be optionally disposed. Herein, JLB consists of, for example, a rubber sheet in which a plurality of cords are embedded in the rubber composition, and can be mounted by spirally winding the sheet on an outer surface of the belt 67 approximately parallel with the tire equator CO.

In addition, in the tire 61, a bead apex 68 extending outwardly in a tire radial direction from the bead core 65 is formed and, at the same time, an inner liner 69 is disposed on an inner side of the carcass 66, and an outer side of a turning up part of the carcass 66 is covered with the side wall 63, and a clinch 64 extending in a tire radial direction from the side wall 63.

The tire 61 shown in Fig. 6 is a tire for a passenger automobile. The present invention is not limited to this, but is applied to various tires such as a passenger automobile, a truck, a bus, and a heavy vehicle.

Since in the rubber composition for a base tread of the present invention, silica, a silane coupling agent, and calcium stearate are incorporated in the rubber component at the aforementioned appropriate contents, respectively, in a tire using a base tread formed by using the rubber composition for a base tread of the present invention, rolling resistance of the tire can be reduced and, further, excellent durability of the tire can be obtained. Therefore, it is preferable that the rubber composition for a base tread of the present invention is used for forming a base tread of the tire.

In addition, since the base tread 62b in which a used amount of a material derived from a petroleum source such as carbon black is suppressed in the tire 61 having the aforementioned construction, an ecological tire by which the environment can be considered, and one can be ready for reduction in a supply amount of a petroleum in future can be obtained.

From a viewpoint that a used amount of a material derived from a petroleum source is suppressed, it goes without saying that it is preferable that sites of the tire other than the base tread 62b are made using components other than components derived from a petroleum source at an amount which is as large as possible.

In addition, in the foregoing, the tire for a passenger automobile is exemplified, the present invention is not limited to this, but tires which are used in various vehicles such as a passenger automobile, a truck, a bus, and a heavy vehicle can be made..

<Rubber composition for side wall>

The rubber composition for a tire of the present invention can be used, for example, as a rubber composition for a side wall.

The rubber composition for a side wall of the present invention has a construction containing not less than 15 parts by mass and not more than 60 parts by mass of silica, and not less than 2 part by mass of calcium stearate based on 100 parts by mass of the rubber component.

The present inventors intensively studied and, as a result, found out that a rubber composition having a construction that a rubber component containing at least one of a natural rubber and an epoxidized natural rubber is contained and, at the same time, based on 100 parts by mass of the rubber component, not less than 15 parts by mass and not more than 60 parts by mass of silica and not less than 2 parts by mass of calcium stearate are contained can not only suppress a used amount of a material derived from a petroleum source, but also has better processability at unvulcanization, and reduction in a rubber strength after heat aging can be suppressed. The present inventors thought that, when a side wall is formed using this rubber composition, processability and properties of the side wall can be made excellent, resulting in completion of the present invention.

In addition, when a rubber containing both of a natural rubber and an epoxidized natural rubber is used as the rubber component for a side wall of the present invention, an epoxy content of the epoxidized natural rubber is preferably 5% by mass or more, more preferably 10% by mass or more. When an epoxy content of the epoxidized natural rubber is 5% by mass or more of a whole rubber component, particularly 10% by mass or more, there is a tendency that flexing resistance performance of a side wall formed by using the rubber composition for a side wall of the present invention is excellent.

In addition, when a rubber containing both of a natural rubber and an epoxidized natural rubber is used as the rubber component for a side wall of the present invention, an epoxy content of the epoxidized natural rubber is preferably 65% by mass or less, more preferably 60% by mass or less, further preferably 50% by mass or less. When an epoxy content of the epoxidized natural rubber is more than 50% by mass, particularly more than 60% by mass, further more than 65% by mass, there is a tendency that heat generation of a tire having a side wall formed by using the rubber composition for a side wall of the present invention at running becomes a high temperature.

In addition, in the rubber composition for a side wall of the present invention, when at least one of a natural rubber and an epoxidized natural rubber is contained in the rubber component, at least one kind other rubber such as a butadiene rubber (BR), a styrene butadiene rubber (SBR), an isoprene rubber (IR) and a butyl rubber (IIR) may be contained.

However, a rubber other than a natural rubber and an epoxidized natural rubber may be contained in the rubber component in the rubber composition for a side wall of the present invention, but a content thereof is preferably 20% by mass or less, more preferably 10% by mass or less, further preferably 5% by mass or less, most preferably 0% by mass.

<Silica of rubber composition for side wall>

In the rubber composition for covering a carcass cord of the present invention, not less than 15 parts by mass and not more than 60 parts by mass of silica is contained based on 100 parts by mass of the rubber component. Since by adopting such a construction, a used amount of carbon black as a filler can be reduced, there is a tendency that a used amount of a material derived from a petroleum can be suppressed and, at the same time, the sufficient reinforcing effect due to silica can be obtained. In addition, when a content of silica is not more than 60 parts by mass based on 100 parts by mass of the rubber component, there is a tendency that flexing resistance performance becomes better, and heating property of a tire becomes better. Note that as silica, the same silica as that for the rubber composition for a tire can be used.

Herein, a content of silica is preferably 30 parts by mass or more based on 100 parts by mass of the rubber component. When a content of silica is 30 parts by mass or more based on 100 parts by mass of the rubber component, there is a tendency that strength of a rubber after vulcanization of the rubber composition for a side wall of the present invention is enhanced.

In addition, a BET specific surface area of silica is preferably not less than 80 $m^2/g$, more preferably not less than 100 $m^2/g$. When a BET specific surface area of silica is not less than 80 $m^2/g$, particularly not less than 100 $m^2/g$, there is a tendency that strength of a rubber after vulcanization of the rubber composition for a side wall of the present invention is enhanced.

In addition, a BET specific surface area of silica is preferably not more than 230 $m^2/g$, more preferably not more than 210 $m^2/g$. When a BET specific surface area of silica is not more than 230 $m^2/g$, particularly not more than 210 $m^2/g$, there is a tendency that processability of the rubber composition of the present invention becomes better.

In addition, a BET specific surface area of silica can be measured by the method according to ASTM-D-4820-93.

<Calcium stearate of rubber composition for side wall>

In the rubber composition for a side wall of the present invention, not less than 2 parts by mass of calcium stearate is contained based on 100 parts by mass of the rubber component. As described above, since in the rubber composition for a side wall of the present invention, silica is contained as a filler at not less than 15 parts by mass and not more than 60 parts by mass, there is a possibility that processability at unvulcanization is deteriorated, and a strength of a rubber after vulcanization is reduced due to heat aging. However, by containing calcium stearate at 2 parts by mass or more based on 100 parts by weight of the rubber component, there is a tendency that processability can be made better at unvulcanization, and reduction in a strength of a rubber due to heat aging can be effectively suppressed after vulcanization. Herein, as calcium stearate, the same calcium stearate as that for the rubber component for a tire can be used.

Particularly, in the case where the rubber component contains an epoxidized natural rubber, when calcium stearate is contained at 2 parts by mass or more based on 100 parts by mass of the rubber component, there is a tendency that both of flexing resistance performance and cutting resistance performance which are the characteristic of a side wall are exerted.

In addition, a content of calcium stearate is preferably 5 parts by mass or more based on 100 parts by mass of the rubber component. When a content of calcium stearate is 5 parts by mass or more based on 100 parts by mass of the rubber component, there is a tendency that cutting resistance performance after heat aging of a side wall formed using the rubber composition for a side wall of the present invention is excellent.

Further, a content of calcium stearate is preferably 15 parts by mass or less, more preferably 10 parts by mass or less based on 100 parts by mass of the rubber component. When a content of calcium stearate is 15 parts by mass or less, particularly 10 parts by mass or less based on 100 parts by mass of the rubber component, there is a tendency that processability of the rubber composition for a side wall of the present invention and cutting resistance performance after heat aging of a side wall formed using the rubber composition for a side wall of the present invention are excellent.

<Carbon black of rubber composition for side wall>

In the rubber composition for a side wall of the present invention, a conventionally known carbon black derived from a petroleum source may be contained. Herein, from a viewpoint that a used amount of a material derived from a petroleum source is reduced, a content of carbon black is preferably not more than 25 parts by mass, more preferably not more than 5 parts by mass based on 100 parts by mass of the rubber component, most preferably no carbon black is contained. Note that when carbon black is incorporated, the same carbon black as that for the rubber composition for a tire can be incorporated.

<Silane coupling agent of rubber composition for side wall>

In the rubber composition for a side wall of the present invention, a silane coupling agent may be contained. When the silane coupling agent is contained in the rubber composition for a side wall of the present invention, a content of the silane coupling agent is preferably 6 parts by mass or more, more preferably 8 parts by mass or more based on 100 parts by mass of silica. When a content of the silane coupling agent is 6 parts by mass or more, particularly 8 parts by mass or more based on 100 parts by mass of silica, there is a tendency that strength of a rubber after vulcanization of the rubber composition for a side wall of the present invention is enhanced. In addition, as the silane coupling agent, the same silane coupling agent as that for the rubber composition for a tire can be used.
In addition, when the silane coupling agent is contained in the rubber composition for a side wall of the present invention, a content of the silane coupling agent is preferably 15 parts by mass or less, more preferably 10 parts by mass or less based on 100 parts by mass of silica. When a content of the silane coupling agent is 15 parts by mass or less, particularly 10 parts by mass or less based on 100 parts by mass of silica, there is a tendency that processability of the rubber composition for a side wall of the present invention is excellent and, at the same time, the production cost can be reduced.

<Other component of rubber composition for side wall>

In the rubber composition for a side wall of the present invention, in addition to the aforementioned materials, for example, various materials such as an oil, a wax, an aging preventing agent, stearic acid, zinc oxide, sulfur and a vulcanization accelerator which are generally used in the tire industry may be appropriately incorporated. In addition, when these components are incorporated, the same components as those for the rubber composition for a tire may be incorporated.

<Process for producing rubber composition for side wall>

The rubber composition for a side wall of the present invention can be obtained by mixing the aforementioned materials by kneading the materials using a convnetionally known open roll, Banbury mixer, press-type kneader or continuous kneader.

<Side wall made using rubber composition for side wall>

A side wall can be formed by extrusion-processing the rubber composition for a side wall of the present invention in the unvulcanized state.

<Tire made using side wall made using rubber composition for side wall>

A tire can be produced by preparing a green tire by arranging the above-formed side wall and other tire members at prescribed positions and, thereafter, vulcanizing the rubber composition of each tire member constituting the green tire.

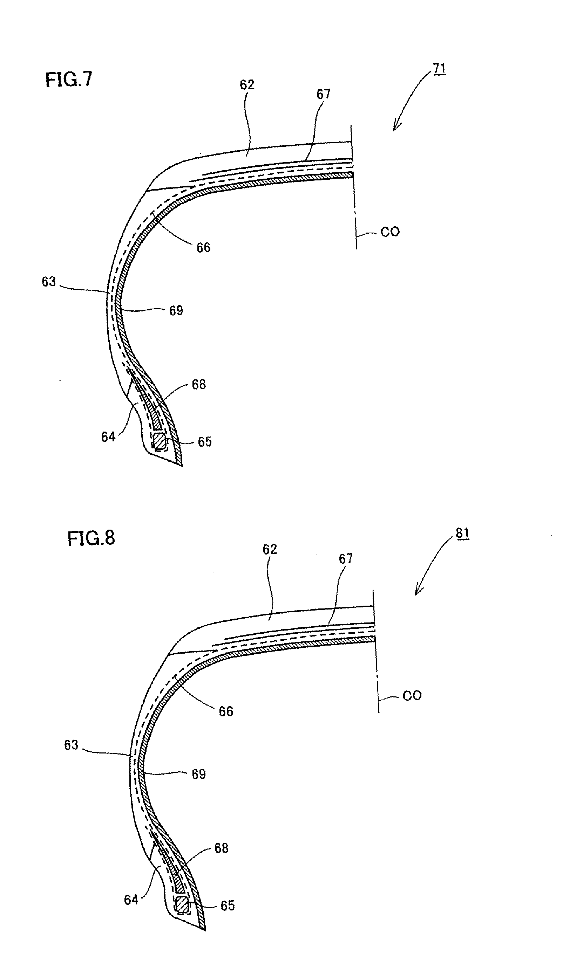

Fig. 7 shows a schematic cross-sectional view of a left upper half of one example of the above-produced tire. Herein, the tire 71 is characterized in that a side wall 63 is produced using the rubber composition for a side wall of the present invention.
Herein, the tire 71 comprises a tread 62 which is to be an earth surface of the tire 71, one pair of side walls 63 which extend in a tire radial direction from both ends of the tread 62 to constitute a side of the tire 71, and a bead core 65 situated at an inner end of each side wall 63. In addition, a carcass 66 is bridged between bead cores 65, 65 and, at the same time, a belt 67 having the hooping effect to reinforce a tread 62 is disposed on an outer side of this carcass 66 and on an inner side of the tread 62.

The carcass 66 can be formed of, for example, a rubber sheet in which a plurality of cords at an angle of, for example, 70° to 90° relative to tire equator CO (an imaginary line obtained by rotating, one time, a center of a width of an outer circumferential surface of the tire 71 in a circumferential direction of an outer circumferential surface of the tire 71) are embedded in the rubber composition. In addition, the carcass 66 is engaged by turning up from an inner side to an outer side of a tire axial direction around the bead core 65 from the tread 62 via the side wall 63.

The belt 67 can be formed of a rubber sheet in which a plurality of cords at an angle of, for example, 40° or less relative to the tire equator CO are embedded in the rubber composition.

In addition, in the tire 71, JLB (not shown) for suppressing peeling of the belt 67 may be optionally disposed. Herein, JLB consists of, for example, a rubber sheet in which a plurality of cords are embedded, and can be mounted by spirally winding the sheet on an outer surface of the belt 67 approximately parallel with the tire equator CO.

In addition, in the tire 71, a bead apex 68 extending outwardly in a tire radial direction from the bead core 65 is formed and, at the same time, an inner liner 69 is disposed on an inner side of the carcass 66, and an outer side of a turning up part of the carcass 66 is covered with the side wall 63, and a clinch 64 extending inwardly in a tire radial direction from the side wall 63. In addition, the side wall 63 is formed by vulcanizing the rubber composition for a side wall of the present invention.

Since the tire 71 having the aforementioned construction is such that the side wall 63 is formed using the rubber composition of the present invention, and reduction in a rubber strength of the side wall 63 due to heat aging can be suppressed, a life of the tire can be prolonged and, as the same time, operation stability of a vehicle can be improved.

The tire shown in Fig. 7 is a tire for a passenger automobile, but the present invention is not limited to this, and can be applied to, for example, a passenger automobile, a truck, a bus, and a heavy vehicle.

In addition, since the tire 71 having the aforementioned construction can suppress a used amount of a material derived from a petroleum source, an ecological tire by which the environment can be considered, and one can be ready for decrease in a supply amount of a petroleum in future can be made.

In addition, from a viewpoint that a used amount of a component derived from a petroleum source is suppressed, it goes without saying that it is preferable to use components other than a component derived from a petroleum source in sites of the tire other than the side wall 63, at an amount which is as great as possible.

<Rubber composition for clinch>

The rubber composition for a tire of the present invention can be used, for example, as a rubber composition for a clinch.

The rubber composition for a clinch of the present invention has a construction containing not less than 60 parts by mass of silica, and not less than 2 parts by mass and not more than 10 parts by mass of calcium stearate based on 100 parts by mass of a rubber component.

The present inventors intensively studied and, as a result, found out that a rubber composition having a construction that a rubber component containing at least one of a natural rubber and an epoxidized natural rubber is contained and, at the same time, based on 100 parts by mass of the rubber component, not less than 60 parts by mass of silica and not less than 2 parts by mass and not more than 10 parts by mass of calcium stearate are contained can not only suppress a used amount of a material derived from a petroleum source, but also a rubber having better processability at unvulcanization, and having high abrasion resistance and a high strength after vulcanization can be made. The present inventors thought that, when a clinch is formed using this rubber composition, processability and properties of the clinch can be made to be excellent, resulting in completion of a rubber composition for a clinch of the present invention.

In addition, when a rubber containing both of a natural rubber and an epoxidized natural rubber is used as the rubber component for a clinch of the present invention, an epoxy content of the epoxidized natural rubber is preferably 5% by mass or more, more preferably 10% by mass or more. When an epoxy content of the epoxidized natural rubber is 5% by mass or more of a total rubber component, particularly 10% by mass or more, there is a tendency that a rubber after vulcanization of the rubber composition of the present invention is excellent in abrasion resistance at high severity in this order..

In addition, when a rubber containing both of a natural rubber and an epoxidized natural rubber is used as the rubber component for a clinch of the present invention, an epoxy content of the epoxidized natural rubber is preferably 65% by mass or less, more preferably 60% by mass or less, further preferably 50% by mass or less of all rubber components. When an epoxy content of the epoxidized natural rubber is more than 50% by mass, particularly more than 60% by mass, further more than 65% by mass, there is a tendency that heat generation of a tire having a clinch formed by using the rubber composition for a clinch of the present invention at running becomes high in this order.

In addition, in the rubber composition for a clinch of the present invention, when at least one of a natural rubber and an epoxidized natural rubber is contained in the rubber component, at least one kind other rubber such as a butadiene rubber (BR), a styrene butadiene rubber (SBR), an isoprene rubber (IR) and a butyl rubber (IIR) may be contained.

However, a rubber other than a natural rubber and an epoxidized natural rubber may be contained in the rubber component in the rubber composition for a clinch of the present invention, but a content thereof is preferably 20% by mass or less, more preferably 10% by mass or less, further preferably 5% by mass or less, most preferably 0% by mass.

<Silica of rubber composition for clinch>

In the rubber composition for a clinch of the present invention, 60 parts by mass or more of silica is contained based on 100 parts by mass of the rubber component. By adopting such a construction, since a used amount of carbon black as a filler can be reduced, a used amount of a component derived from a petroleum can be reduced and, at the same time, the sufficient reinforcing effect due to silica can be obtained. As silica, the same silica as that for the rubber composition for a tire can be used.

Herein, a content of silica is preferably 100 parts by mass or less, more preferably 90 parts by mass or less based on 100 parts by mass of the rubber component. When a content of silica is 100 parts by mass or less based on 100 parts by mass of the rubber component, particularly 90 parts by mass or less, there is a tendency that processability of the rubber component for a clinch of the present invention becomes better.

Herein, a BET specific surface area of silica is preferably 80 $m^2/g$ or more, more preferably 100 $m^2/g$ or more. When a BET specific area of silica is 80 $m^2/g$ or more, particularly 100 $m^2/g$ or more, there is a tendency that strength of a rubber after vulcanization of the rubber composition for a clinch of the present invention is enhanced.

In addition, a BET specific surface area of silica is preferably 230 $m^2/g$ or less, more preferably 210 $m^2/g$ or less. When a BET specific area of silica is 230 $m^2/g$ or less, particularly 210 $m^2/g$ or less, there is a tendency that processability of the rubber composition for a clinch of the present invention becomes better.

In addition, a BET specific surface area of silica can be measured by the method according to ASTM-D-4820-93.

<Calcium stearate of rubber composition for clinch>

In the rubber composition for a clinch of the present invention, not less than 2 parts by mass and not more than 10 parts by mass of calcium stearate is contained based on 100 parts by mass of the rubber component. As described above, since the rubber composition for a clinch of the present invention contains silica as a filler at not less than 60 parts by mass based on 100 parts by mass of the rubber component, there is a tendency that processability at unvulcanization is deteriorated. However, by containing calcium stearate at not less than 2 part by mass and not more than 10 parts by mass based on 100 parts by mass of the rubber component, such processability at unvulcanization can be made to be better, and a rubber having both of high abrasion resistance and a high strength can be obtained after vulcanization. As calcium stearate, the same calcium stearate as that for the rubber composition for a tire can be used.

In addition, a content of calcium stearate is preferably not less than 5 parts by mass based on 100 parts by mass of the rubber component. When a content of calcium stearate is not less than 5 parts by mass based on 100 parts by mass of the rubber component, there is a tendency that processability of the rubber component for a clinch of the present invention, and abrasion resistance of a rubber after vulcanization are excellent.

In addition, a content of calcium stearate is preferably not more than 7 parts by mass based on 100 parts by mass of the rubber component.

<Carbon black of rubber composition for a clinch>

In the rubber composition for a clinch of the present invention, the previously known carbon black derived from a petroleum source may contained. However, from a viewpoint that a used amount of a component derived from a petroleum source is reduced, a content of carbon black is preferably not more than 25 parts by mass, more preferably not more than 5 parts by mass based on 100 parts by mass of the rubber component, most preferably no carbon black is contained. As carbon black, the same carbon black as that for the rubber composition for a tire can be used.

<Silane coupling agent of rubber composition for clinch>

In the rubber composition for a clinch of the present invention, a silane coupling agent may be contained. When the silane coupling agent is contained in the rubber composition for a clinch of the present invention, a content of the silane coupling agent is preferably not less than 6 parts by mass, more preferably not less than 8 parts by mass based on 100 parts by mass of silica. When a content of the silane coupling agent is not less than 6 parts by mass, particularly not less than 8 parts by mass based on 100 parts by mass of silica, there is a tendency that a strength of a rubber after vulcanization of the rubber composition for a clinch of the present invention, and abrasion resistance are excellent.

In addition, when the silane coupling agent is contained in the rubber composition for a clinch of the present invention, a content of the silane coupling agent is preferably not more than 15 parts by mass, more preferably not more than 10 parts by mass based on 100 parts by mass of silica. When a content of the silane coupling agent is not more than 15 parts by mass, particularly not more than 10 parts by mass based on 100 parts by mass of silica, there is a tendency that processability of the rubber composition for a clinch of the present invention is excellent and, at the same time, the production cost can be reduced.

<Other components of rubber composition for clinch>

In the rubber composition for a clinch of the present invention, in addition to aforementioned materials, various materials such as an oil, a wax, an aging preventing agent, stearic acid, zinc oxide, sulfur and a vulcanization accelerator which are generally used in the tire industry may be appropriately incorporated. In addition, when these components are incorporated, the same components as those for the rubber composition for a tire may be incorporated.

<Process for producing rubber composition for clinch>

The rubber composition for a clinch of the present invention can be obtained, for example, by mixing the aforementioned materials by kneading them using a conventionally known open roll, Banbury mixer, a press-type kneader or continuous kneader.

<Clinch made using rubber composition for a clinch>

A clinch can be formed by extrusion-processing the rubber composition for a clinch of the present invention in the unvulcanized state.

<Tire made using clinch made using rubber composition for a clinch>

A tire can be produced by preparing a green tire by arranging the above formed clinch and other tire members at prescribed positions and, thereafter, vulcanizing the rubber composition of each tire member constituting the green tire.
Fig. 8 shows a schematic cross-sectional view of a left upper half of one example of the above-produced tire. Herein, the tire 81 is characterized in that a clinch 64 is produced using the rubber composition for a clinch of the present invention. Other explanation is the same as that described above.
Since the tire 81 having the aforementioned construction is such that the clinch 64 is formed using the rubber composition for a clinch of the present invention, the clinch 64 can be made to have high abrasion resistance and a high strength, therefore, occurrence of abrasion of a rim and a bead wire of the tire 81 can be reduced.
The tire 81 shown in Fig. 8 is a tire for a passenger automobile, but the present invention is not limited to this, and is applied to various tires such as a passenger automobile, a truck, a bus, and a heavy vehicle.
In addition, since the tire 81 having the aforementioned construction can suppress a used amount of a material derived from a petroleum source, an ecological tire by which the environment can be considered, and one can be ready for reduction in a supply amount of a petroleum in future can be made.
In addition, from a viewpoint that a used amount of a component derived from a petroleum source is suppressed, it goes without saying that it is preferable to make a tire using components other than a component derived from a petroleum source at an amount which is as large as possible, also in sites of the tire other than a clinch 64.

<Rubber composition for JLB>

The rubber composition for a tire of the present invention can be used, for example, as a rubber composition for JLB. The rubber composition for JLB of the present invention has a construction containing not less than 40 parts by mass of silica, and not less than 0.5 part by mass and not more than 10 parts by mass of calcium stearate based on 100 parts by mass of the rubber component.
The present inventors intensively studied and, as a result, found that a rubber composition having a construction that a rubber component containing at least one of a natural rubber and an epoxidized natural rubber is contained and, at the same time, not less than 40 parts by mass of silica, and not less than 0.5 part by mass and not more than 10 parts by mass of calcium stearate based on 100 parts by mass of the rubber component are contained can not only suppress a used amount of a material derived from a petroleum source, and improve a rubber strength after heat aging, but also improve adhesion properties between a rubber and a cord. The present inventors thought that when this rubber composition is used for making JLB, properties of JLB can be excellent, resulting in completion of the present invention.
Herein, in the rubber composition for JLB of the present invention, as the rubber composition, a rubber being any one of a natural rubber and an epoxidized natural rubber, or a mixed rubber obtained by mixing both of a natural rubber and an epoxidized natural rubber is used. As described above, by using at least any one of a natural rubber and an epoxidized natural rubber as the rubber component, a used amount of a material derived from a petroleum source can be reduced.

Note that the rubber component in the rubber composition for JLB of the present invention may contain a rubber other than a natural rubber and an epoxidized natural rubber, and a content thereof is preferably not more than 20% by mass, more preferably not more than 10% by mass, further preferably not more than 5% by mass, most preferably 0% by mass of a total rubber component.

In addition, when a rubber containing both of a natural rubber and an epoxidized natural rubber is used in the rubber composition for JLB of the present invention, an epoxy content of the epoxidized natural rubber is preferably not less than 5% by mass, more preferably not less than 10% by mass of a total rubber component. When the epoxy content of the epoxidized natural rubber is not less than 5% by mass, particularly not less than 10% by mass of a total rubber component, there is a tendency that a rubber strength after vulcanization of the rubber composition for JLB of the present invention is increased in this order.

In addition, when a rubber containing both of a natural rubber and an epoxidized natural rubber is used as the rubber component in the rubber composition for JLB of the present invention, an epoxy content of the epoxidized natural rubber is preferably not more than 65% by mass, more preferably not less than 60% by mass, further preferably not less than 50% by mass of a total rubber component. When an epoxy content of the epoxidized natural rubber is not more than 65% by mass, particularly not more than 60% by mass, further not more than 50% by mass of a total rubber component, there is a tendency that heat generation of a tire due to vehicle running is reduced in this order, in a tire having JLB formed of the rubber composition for JLB of the present invention.

In addition, in the rubber composition for JLB of the present invention, as the natural rubber and the epoxidized natural rubber, the same natural rubber and epoxidized natural rubber as those for the rubber composition for a tire can be used.

<Silica of rubber composition for JLB>

In the rubber composition for JLB of the present invention, not less than 40 parts by mass of silica is contained based on 100 parts by mass of the rubber component. By adopting such a construction, since a used amount of carbon black as a filler can be reduced, a used amount of a component derived from a petroleum source can be reduced. As silica, the same silica as that for the rubber composition for a tire can be used.

Herein, a BET specific surface area of silica is preferably not less than 80 $m^2/g$, more preferably not less than 100 $m^2/g$. When a BET specific surface are of silica is not less than 80 $m^2/g$, particularly not less than 100 $m^2/g$, there is a tendency that strength of a rubber after vulcanization of the rubber composition for JLB of the present invention is enhanced.

In addition, a BET specific surface area of silica is preferably not more than 230 $m^2/g$, more preferably not more than 210 $m^2/g$. When a BET specific surface area of silica is not more than 230$m^2/g$, particularly not more than 210 $m^2/g$, there is a tendency that dispersibility (processability) of silica in the rubber composition for JLB of the present invention becomes better.

In addition, a BET specific surface area of silica can be measured by the method according to ASTM-D-4820-93.

<Calcium stearate of rubber composition for JLB>

In the rubber composition for JLB of the present invention, not less than 0.5 part by mass and not more than 10 parts by mass of calcium stearate is contained based on 100 parts by mass of the rubber component. Herein, a content of calcium stearate is preferably not less than 1 part by mass, further preferably not less than 5 parts by mass based on 100 parts by mass of the rubber component. As calcium stearate, the same calcium stearate as that for the rubber composition for a tire can be used.

In the rubber composition for JLB of the present invention, by adopting a construction containing a rubber component containing at least one of a natural rubber and an epoxidized natural rubber and, not less than 40 parts by mass of silica based on 100 parts by mass of the rubber component, and not less than 0.5 part by mass and not more than 10 parts by mass, preferably not less than 1 part by mass and not more than 10 parts by mass, further preferably not less than 5 parts by mass and not more than 10 parts by mass of calcium stearate based on 100 parts by mass of this rubber component, effects such that reduction in a rubber strength due to heat aging after vulcanization of the rubber composition for JLB for the present invention can be suppressed and, at the same time, adhesion properties between a rubber after vulcanization and a cord is improved are exhibited.

<JLB>

JLB is provided annularly along a circumferential direction of an annular carcass on an annular belt provided along a circumferential direction of the carcass on an outer circumferential surface of the carcass, and suppresses the belt from floating from the carcass by a centrifugal force of a tire at vehicle running. It is preferable that JLB is provided along a circumferential direction of the carcass, but for example, it may be provided in a direction tilting at an angle in arrange of not less than 0° and not more than 10° relative to a circumferential direction of the carcass.

In addition, a construction of JLB may be, for example, a construction that a cord is embedded in a rubber, but JLB is exposed to heat generated in a tire at vehicle running, and is heat-aged, and a rubber strength of JLB is reduced, since it becomes impossible to sufficiently push the belt, the function of suppressing the belt from floating at vehicle running is reduced. In addition, also when adhesion properties between a rubber constituting JLB and a cord embedded in the rubber is deteriorated, pushing of the belt becomes insufficient, and the function of suppressing the belt from floating at vehicle running is reduced.

Thus, it is thought that when JLB is formed using the rubber composition for JLB of the present invention which can suppress reduction in a rubber strength due to heat aging after vulcanization and, at the same time, can improve adhesion properties between a rubber after vulcanization and a cord, and a tire is made using the JLB, floating of the belt at vehicle running can be sufficiently suppressed. Therefore, the rubber composition for JLB of the present invention is preferably used in utility of formation of JLB. Further, when JLB is formed using the rubber composition for JLB of the present invention, a used amount of a component derived from a petroleum source can be also suppressed as compared with the previous JLB formed using a component derived from petroleum sources such as a synthetic rubber and a carbon black.

<Carbon black of rubber composition for JLB>

In addition, the rubber composition for JLB of the present invention may contain the previously known carbon black derived from a petroleum source. However, from a viewpoint that a used amount of a component derived from a petroleum source is reduced, a content of carbon black is preferably not more than 25 parts by mass, more preferably not more than 5 parts by mass based on 100 parts by mass of the rubber component. Note that as carbon black, the same carbon black as that for the rubber composition for a tire can be used.

<Other components of rubber composition for JLB>

In the rubber composition for JLB of the present invention, in addition to the aforementioned materials, various materials such as a silane coupling agent, an oil, a wax, an aging preventing agent, stearic acid, zinc oxide, sulfur and a vulcanization accelerator which are generally used in the tire industry may be appropriately incorporated. When these components are incorporated, the same components as those for the rubber composition for a tire may be incorporated.

<Process for producing rubber composition JLB>

The rubber composition for JLB of the present invention can be produced, for example, by mixing a rubber component containing at least one of a natural rubber and an epoxidized natural rubber, silica, and calcium stearate. Herein, it goes without saying that, if necessary, the previously known additives may be appropriately added, and mixed.

In addition, as a mixing method used in producing the rubber composition for JLB of the present invention, the previously known mixing method can be used, and examples include a method of kneading components using a conventionally known open roll, Banbury mixer, press-type kneader or continuous kneader.

<JLB made using rubber composition for JLB>

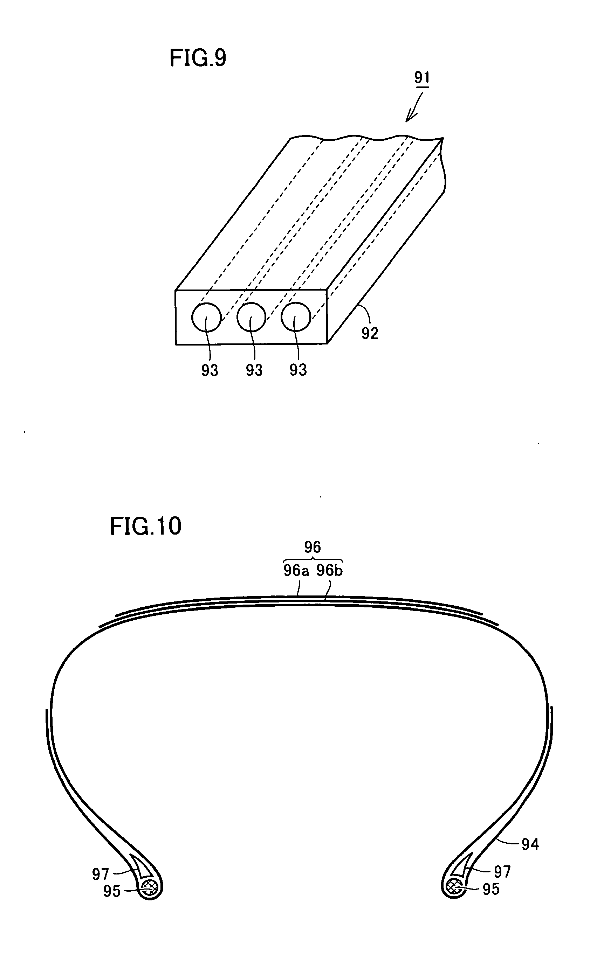

Fig. 9 shows a schematic perspective of one example of JLB produced using the rubber composition for JLB of the present invention.

Herein, JLB 91 has a construction that three cords 93 are embedded in the cuboid rubber composition 92 for JLB of the present invention, and these three cords 93 are arranged at an interval so as to be parallel with each other. In addition, as the cord 93, for example, a nylon cord or a rayon cord can be used, but from a viewpoint that a used amount of a component derived from a petroleum source is reduced, and from a viewpoint that adhesion properties with a vulcanized rubber obtained by vulcanizing the rubber composition of the present invention is improved, it is preferable to use a rayon cord. In addition, it goes without saying that JLB produced using the rubber composition for JLB of the present invention is not limited to a construction shown in Fig. 9 as far as a cord is embedded in the rubber composition for JLB of the present invention.

<Tire made using JLB made using rubber composition for JLB>

One example of a process for producing a tire using JLB 91 shown in Fig. 9 will be described below. First, for example, a carcass having a construction that a cord made of a polyester is embedded in a rubber sheet is annularly wound on an outer circumferential surface of the previously known drum roll.

Then, a bead wire obtained by bundling a plurality of wires into an annulus is hammered on an outer circumferential surface of both ends of an annular carcass and, at the same time, a bead apex is mounted, and both ends of the carcass are turned up inwardly to wrap the bead wire and the bead apex with the carcass.

Subsequently, as shown in a schematic cross-sectional view of Fig. 10, the carcass 94 at an end of which the bead wire 95 and the bead apex 97 are wrapped is inflated into a toroid, and a belt 96 obtained by successively laminating a first belt layer 96b and a second belt layer 96a on an outer circumferential surface at a center of the carcass 94 is annularly disposed along a circumferential direction of the carcass 94.

Herein, the first belt layer 96b and the second belt layer 96a constituting the belt 96 have, respectively, a construction that a cord such as a steel cord is embedded in the cuboid rubber composition for a belt.

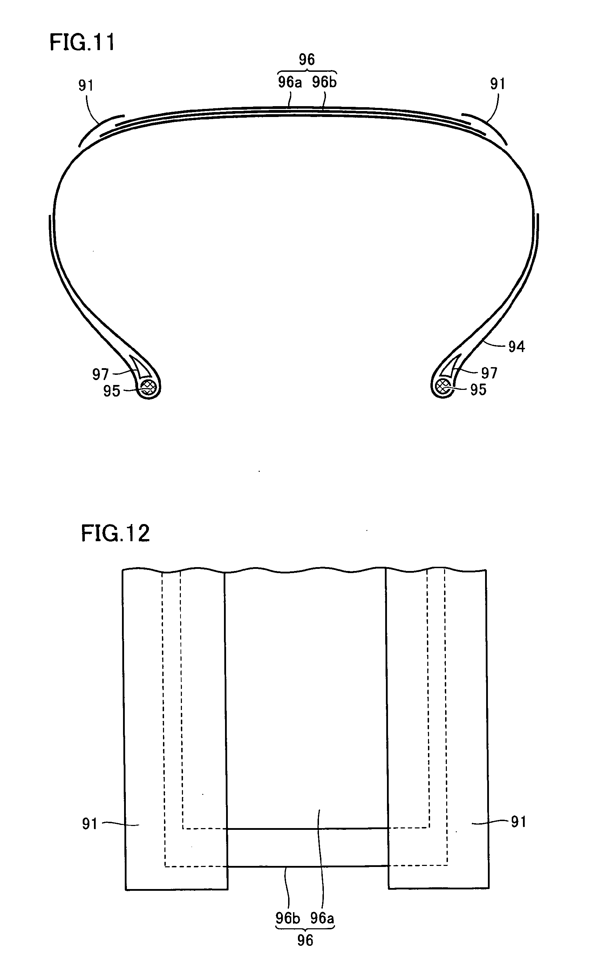

Then, as shown in a schematic cross-sectional view of Fig. 11, JLB 91 having a construction shown in Fig. 9 is annularly wound along a circumferential direction of the carcass 94 so as to cover an end of the belt 96 on an outer circumferential surface of the carcass 94.

Fig. 12 is a schematic expanded plane view showing a positional relationship between JLB 91 and the belt 96 after winding of JLB 91 shown in Fig. 11. Herein, as shown in Fig. 12, two JLBs 91 are provided, respectively, so that a part thereof covers an end of an outer circumferential surface of the belt 96, and a remaining part is protruded on an outer circumferential surface of the carcass 94. In addition, two JLBs 91 are provided, respectively, so as to cover each end of the first belt layer 96b and the second belt layer 96a. A provision place of JLB is not particularly limited as far as at least a part of JLB is provided on an outer circumferential surface of the belt.

Thereafter, a green tire is prepared by the previously known method, the prepared green tire is disposed in a mold for molding a tire, and this is vulcanized, thereby, an unvulcanized rubber composition constituting each site such as a tread of the green tire, a side wall, an inner liner, a belt, a carcass, JLB and a bead apex is vulcanized, producing a tire.

In the foregoing, explanation of steps of providing a tread, a side wall and an inner liner is omitted.

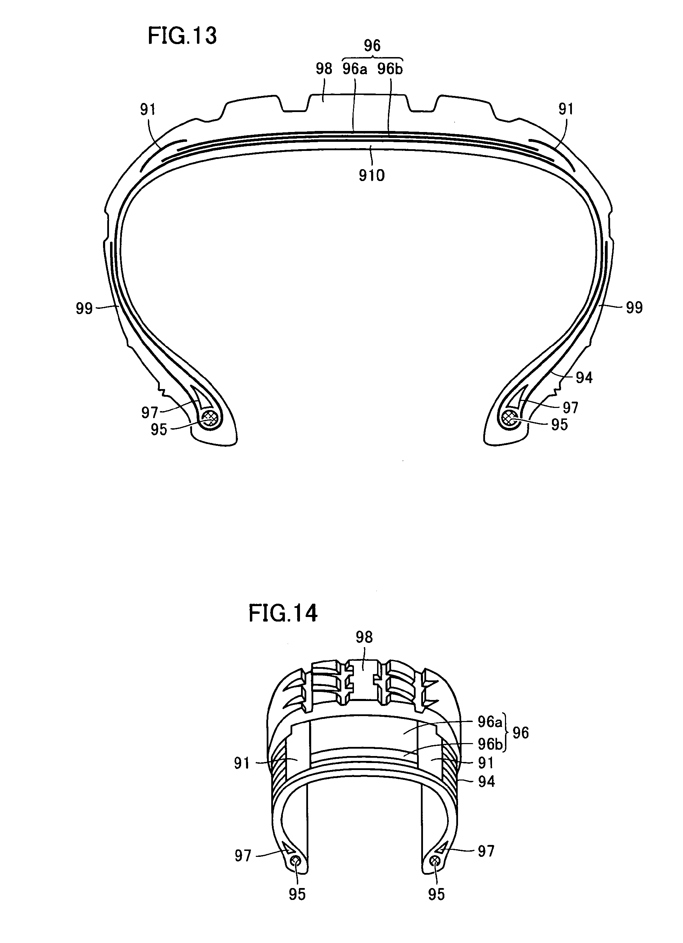

Fig. 13 shows a cross-sectional view of an upper part of one part of the above-produced tire. In addition, Fig. 14 shows a schematic view for illustrating an interior structure of other one example of the above-produced tire.

Herein, in tires shown in Fig. 13 and Fig. 14, a side wall 99 is formed on a side of the carcass 94 in which the bead wire 95 and the bead apex 97 are wrapped at its both ends. In addition, at a center of an outer circumferential surface of the carcass 94, the belt 96 is provided and, at the same time, JLB 91 is provided so as to cover an end of the belt 96, a tread 98 which is to be an earth part of a tire is formed on an outer circumferential side of the belt 96 and JLB 91. In addition, on an inner circumferential surface of the carcass 94, an inner liner 910 is provided in order to suppress a gas such as the air in the interior of the carcass 94 from leaking to the outside.

Since the tire having the aforementioned construction uses JLB prepared using the rubber composition for JLB of the present invention, it can not only suppress a used amount of a component derived from a petroleum source, and suppress reduction in a rubber strength due to heat aging of JLB but also can improve adhesion properties between a rubber of JLB and a cord, therefore, floating of the belt at vehicle running can be substantially suppressed.

From a viewpoint that a used amount of a component derived from a petroleum source is suppressed, it is preferable to prepare sites of the tire other than JLB using components other than a component derived from a petroleum source.

<Rubber composition for bead apex>

The rubber composition for a tire of the present invention can be used, for example, as a rubber composition for a bead apex. The rubber composition for a bead apex of the present invention has a construction containing not less than 60 parts by mass of silica, and not less than 2 parts by mass and not more than 10 parts by mass of calcium stearate based on 100 parts by mass of the rubber component.

The present inventors intensively studied and, as a result, found out that a rubber composition having a construction that a rubber component containing at least one of a natural rubber and an epoxidized natural rubber is contained and, at the same time, based on 100 parts by mass of the rubber component, not less than 60 parts by mass of silica, and not less than 2 parts by mass and not more than 10 parts by mass of calcium stearate are contained can not only suppress a used amount of a component derived from a petroleum source, but also is excellent in molding processability, and can increase thermal aging resistance and a hardness of a rubber after vulcanization. The present inventors thought that when this rubber composition is used in producing a bead apex, the properties of a bead apex can be made to be excellent, resulting in completion of the rubber composition for a bead apex of the present invention.

Herein, in the rubber composition for a bead apex of the present invention, a rubber being any one of a natural rubber and an epoxidized natural rubber, or a mixed rubber obtained by mixing both of a natural rubber and an epoxidized natural rubber is used as the rubber component. By using a rubber component containing at least one of a natural rubber and an epoxidized natural rubber as the rubber component as described above, a used amount of a component derived from a petroleum source can be reduced.

In addition, in the rubber component of the rubber composition for a bead apex of the present invention, a rubber other than a natural rubber and an epoxidized natural rubber may be contained, and a content thereof is preferably not more than 20% by mass, more preferably not more than 10% by mass, further preferably not more than 5% by mass, most preferably 0% by mass of a total rubber component.

In addition, when a mixed rubber obtained by mixing both of a natural rubber and an epoxidized natural rubber is used as the rubber component of the rubber composition for a bead apex of the present invention, an epoxy content of the epoxidized natural rubber is preferably not more than 65% by mass, more preferably not more than 60% by mass, further preferably not more than 50% by mass of a total rubber component. When the epoxy content of the epoxidized natural rubber is not more than 65% by mass, particularly not more than 60% by mass, further not more than 50% by mass of a total rubber component, there is a tendency that heat generation of a tire due to vehicle running is decreased in this order, in a tire having a bead apex formed of the rubber composition for a bead apex of the present invention.

In addition, in the rubber composition for a bead apex of the present invention, as the natural rubber and the epoxidized natural rubber, the same natural rubber and epoxidized natural rubber as those for the rubber composition for a tire can be used, respectively.

<Silica of rubber composition for bead apex>

In the rubber composition for a bead apex of the present invention, not less than 60 parts by mass of silica is contained based on 100 parts by mass of the rubber component. By adopting such a construction, since a used amount of carbon black as a filler can be reduced, a used amount of a component derived from a petroleum source can be reduced. Note that as silica, the same silica as that for the rubber composition for a tire can be used.

Herein, a BET specific surface area of silica is preferably not less than 80 $m^2/g$, more preferably not less than 100 $m^2/g$. When a BET specific surface of silica is not less than 80 $m^2/g$, particularly not less than 100 $m^2/g$, there is a tendency that strength of a rubber after vulcanization of the rubber composition for a bead apex of the present invention is increased.

In addition, a BET specific surface area of silica is preferably not more than 230 $m^2/g$, more preferably not more than 210 $m^2/g$. When a BET specific surface of area of silica is not more than 230 $m^2/g$, particularly not more than 210 $m^2/g$, there is a tendency that dispersibility (processability) of silica in the rubber composition for a bead apex of the present invention becomes better.

In addition, a BET specific surface area of silica can be measured by the method according to ASTM-D-4820-93.

<Calcium stearate of rubber composition for bead apex>

In the rubber composition for a bead apex of the present invention, not less than 2 parts by mass and not more than 10 parts by mass of calcium stearate is contained based on 100 parts by mass of the rubber component. In addition, as calcium stearate, the same calcium stearate as that for the rubber composition for a tire can be used.

Regarding the rubber composition for a bead apex of the present invention, by adopting a construction containing a rubber component containing at least one of a natural rubber and an epoxidized natural rubber and, based on 100 parts by mass of this rubber component, not less than 60 parts by mass of silica, and not less than 2 parts by mass and not more than 10 parts by mass of calcium stearate, effects such that molding processability is excellent, and thermal aging resistance and a hardness of a rubber after vulcanization can be increased are exhibited.

In addition, when a content of calcium stearate is not less than 5 parts by mass and not more than 10 parts by mass based on 100 parts by mass of the rubber component, there is a tendency that molding processability is further improved.

<Bead apex>

A bead apex enhances rigidity of a bead wire to improve operation stability of a tire, by disposing at least a part thereof between a non-turning up part and a turning up part of an annular carcass which has been turning up so as to surround the bead wire disposed on an outer circumferential surface of the carcass at an end in a direction orthogonal with a circumferential direction of the carcass. Therefore, the bead apex is desired to have high thermal aging resistance in order to suppress deterioration due to heat generated at vehicle running, and is desired to have a high hardness in order to enhance rigidity of the bead wire. In addition, the bead apex may be disposed so that a part thereof is protruded from a region between a non-turning up part and a turning up part of the turned up carcass.

In addition, the beads apex is disposed between a non-turning up part and a turning up part of a carcass which has been turned up in the state of an unvulcanized rubber composition formed into a prescribed shape, and when a variation is generated in its molded shape, a variation is also generated in the property of the bead apex after vulcanization.

Therefore, it is desired to use an unvulcanized rubber composition for forming a bead apex, which is excellent in molding processability.

Then, when the bead apex is prepared using the rubber composition of the present invention which can enhance thermal aging resistance and a hardness of a rubber after vulcanization and, at the same time, is excellent in molding processability, and a tire is prepared using the bead apex, it is thought that operation stability of the tire at long term vehicle running can be stably improved. Therefore, the rubber composition of the present invention is preferably used in utility of forming the bead apex. In addition, when the bead apex is formed using the rubber composition of the present invention, a used amount of a component derived from a petroleum source can be suppressed as compared with the previous bead apex formed using a component derived from a petroleum source such as a synthetic rubber and carbon black.

<Carbon black of rubber composition for bead apex>.

In addition, the rubber composition for a bead apex of the present invention may contain the previously known carbon black derived from a petroleum source. However, from a viewpoint that a used amount of a component derived from a petroleum source is reduced, a content of carbon black is preferably not more than 25 parts by mass, more preferably not more than 5 parts by mass based on 100 parts by mass of the rubber component. In addition, as carbon black, the same carbon black as that for the rubber composition of a tire can be used.

<Other components of rubber composition for bead apex>

In the rubber composition for a bead apex of the present invention, in addition to the aforementioned materials, various materials such as a silane coupling agent, an oil, a wax, an aging preventing agent, stearic acid, zinc oxide, sulfur and a vulcanization accelerator which are generally used in the tire industry may be appropriately incorporated. When these components are incorporated, the same components as those for the rubber composition for a tire can be incorporated.

<Process for producing rubber composition for bead apex>

The rubber composition for a bead apex of the present invention can be produced, for example, by mixing a rubber component containing at least one of a natural rubber and an epoxidized natural rubber, silica, and calcium stearate. Herein it goes without saying that, if necessary, the previously known additives may be appropriately added, and mixed.

In addition, as a mixing method used in producing the rubber composition for a bead apex of the present invention, the previously known mixing method can be used, and examples include a method of kneading components using a conventionally known open roll, Banbury mixer, press-type kneader or continuous kneader.

<Bead apex made using rubber composition for bead apex>

By extrusion-processing the rubber composition for a bead apex of the present invention in the unvulcanized state, a bead apex can be formed.

<Tire made using bead apex made using rubber composition for bead apex>

One example of a process for producing a tire using the bead apex made of the rubber composition for a bead apex of the present invention will be described below.

First, a carcass having a construction that a cord made of, for example, a polyester is embedded in a rubber sheet is annularly wound on an outer circumferential surface of the previously known drum roll.

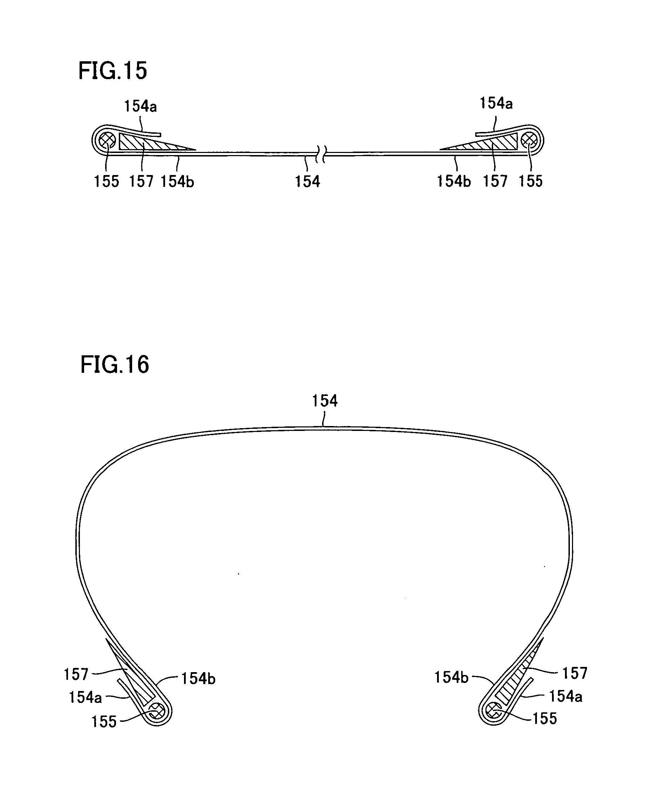

Then, as shown in a schematic cross-sectional view of Fig. 15, a bead wire 155 obtained by bundling a plurality of wires into an annulus is hammered on an outer circumferential surface of both ends of an annular carcass 154 and, at the same time, a bead apex 157 consisting the rubber composition for a bead apex of the present invention is disposed, both ends of the carcass 154 are turned up inwardly to wrap the bead wire 155 and the bead apex 157 between a turning up part 154a and a non-turning up part 154b of the carcass 154.

Subsequently, as shown in a schematic cross-sectional view of Fig. 16, the carcass 154 at an end of which the bead wire 155 and the bead apex 157 are wrapped is inflated into a toroid.

Thereafter, a green tire is made by the previously known method, and the prepared green tire is disposed in a mold for molding a tire, and vulcanized, thereby, an unvulcanized rubber composition constituting each tire site such as a tread, a side wall, a belt, JLB, an inner liner, a carcass, and a bead apex of the green tire is vulcanized to thereby produce a tire.

In addition, in the foregoing, explanation of a step of disposing the tread, the side wall and the inner liner is omitted.

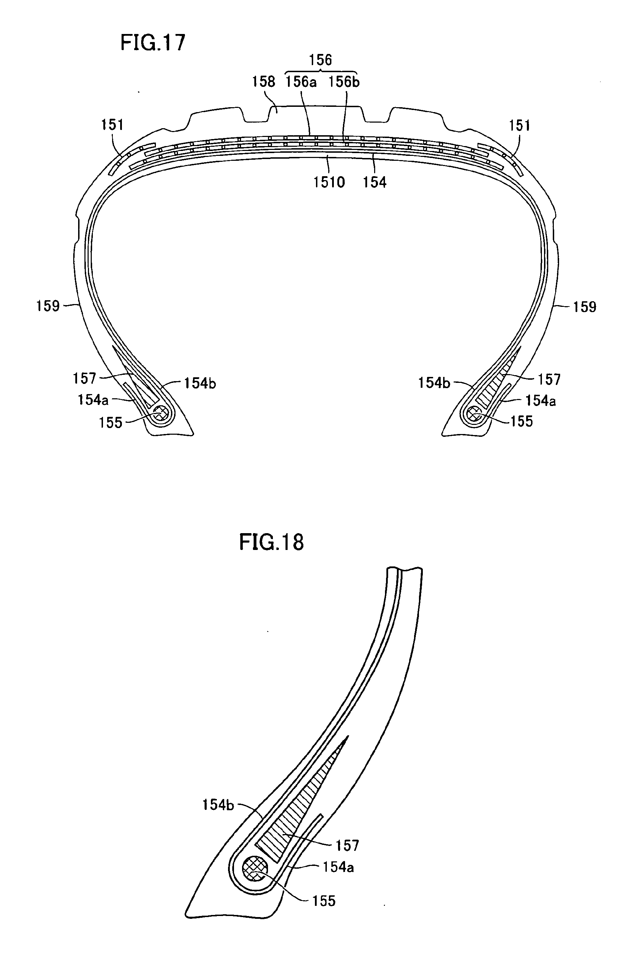

Fig. 17 shows a schematic cross-sectional view of an upper part of one example of the above-produced tire. Fig. 18 shows a schematic expanded cross-sectional view of a vicinity of the tire and the bead apex shown in Fig. 17.

Herein, as shown in Fig. 17, in the above-produced tire, a side wall 159 is formed on a side of the carcass 154 wrapping the bead wire 155 and the bead apex 157 at both ends thereof. In addition, at a center of an outer circumferential surface of the carcass 154, a belt 156 obtained by laminating a first belt layer 156b and a second belt layer 156a in this order is disposed and, at the same time, JLB 151 is disposed so as to cover an end of the belt 156, and a tread 158 which is to be an earth part of a tire is formed on an outer circumferential side of the belt 156 and JLB 151. In addition, on an inner circumferential surface of the carcass 154, an inner liner 1510 is provided in order to suppress a gas such as the air in the interior of the carcass 154 from leaking to the outside.

In addition, in Fig. 18, a part of the bead apex 157 is disposed between a turning up part 154a and a non-turning up part 154b of the carcass 154, and such a shape is formed that a thickness of the bead apex 157 is decreased as it advances in an outer side direction of a diameter of a tire.

Since the tire having the aforementioned construction is made using the bead apex made using the rubber composition for a bead apex of the present invention, it can not only suppress a used amount of a material derived from a petroleum source, and is excellent in molding processability of the rubber composition at unvulcanization, but also can enhance thermal aging resistance and a hardness of the bead apex after vulcanization, operation stability of the tire at long term vehicle running can be stably improved.

In addition, from a viewpoint that a used amount of a component derived from a petroleum source is suppressed, it is preferable to prepare sites of the tire other than the bead apex using components other than a component derived from a petroleum source at an amount which is as large as possible.

(Experimental Example 1)

<Preparation of unvulcanized rubber composition>

First, according to formulation shown in Table 1, materials other than sulfur and a vulcanization accelerator were supplied to a closed-type mixing machine, and kneaded at 150°C for 3 minutes. Then, sulfur and a vulcanization accelerator were added to the resulting kneaded product, and this was kneaded at 90°C for 3 minutes to obtain each of unvulcanized rubber compositions of samples 1 to 5.

A numerical value described in a column of other components in Table 1 indicates an amount of each component expressed in part by mass when assumed that an amount of a rubber component is to be 100 parts by mass.

Table 1

| | | Sample 1 | Sample 2 | Sample 3 | Sample 4 | Sample 5 |
|---|---|---|---|---|---|---|
| Rubber component | Diene-based rubber A [Note 1] | 0 | 0 | 30 | 0 | 0 |
| | Diene-based rubber B [Note 2] | 100 | 100 | 70 | 100 | 100 |
| Other components | Carbon black [Note 3] | 0 | 0 | 60 | 0 | 0 |
| | Silica [Note 4] | 60 | 60 | 0 | 60 | 60 |
| | Process oil [Note 5] | 7 | 7 | 7 | 7 | 7 |
| | Stearic acid [Note 6] | 2 | 2 | 2 | 2 | 2 |
| | Calcium stearate [Note 7] | 1 | 10 | 0 | 0 | 15 |
| | Zinc oxide [Note 8] | 5 | 5 | 5 | 5 | 5 |
| | Silane coupling agent [Note 9] | 4 | 4 | 0 | 4 | 4 |
| | Sulfur [Note 10] | 3 | 3 | 3 | 3 | 3 |
| | Vulcanization accelerator [Note 11] | 1 | 1 | 1 | 1 | 1 |

(continued)

|  |  | Sample 1 | Sample 2 | Sample 3 | Sample 4 | Sample 5 |
|---|---|---|---|---|---|---|
| Evaluation | Rolling resistance | 105 | 106 | 100 | 100 | 90 |
|  | Rubber strength | 6000 | 7000 | 5000 | 5500 | 4000 |

(Note 1) Diene-based rubber A: SBR1502 manufactured by JSR
(Note 2) Diene-based rubber B: TSR20 grade natural rubber (NR)
(Note 3) Carbon black: N339 manufactured by Mitsubishi Chemical Co., Ltd.
(Note 4) Silica: Z115GR manufactured by Rhodia (BET specific surface area: 112 $m^2$/g)
(Note 5) Process oil: Diana process PS32 manufactured by Idemitsu Kosan Co., Ltd.
(Note 6) Stearic acid: paulownia manufactured by NOF Corporation
(Note 7) Calcium stearate: GF200 manufactured by NOF Corporation
(Note 8) Zinc oxide: zinc oxide No. 1 manufactured by Mitsui Mining & Smelting Co., Ltd.
(Note 9) Silane coupling agent: Si75 manufactured by Degussa
(Note 10) Sulfur: Cristex HSOT20 manufactured by Flexis
(Note 11) Vulcanization accelerator: Nocceler NS (manufactured by Ouchishinko Chemical Industrial Co., Ltd.)

<Preparation of carcass>

Each of unvulcanized rubber compositions of samples 1 to 5 prepared as described above was processed into a thin film of 1 mm or less using a calendar roll, the following carcass cord was covered with the unvulcanized rubber composition which had been processed into a film, and each carcass of samples 1 to 5 was prepared from each of unvulcanized rubber compositions of samples 1 to 5.

In addition, in carcasses of samples 1 to 5, the condition except for the unvulcanized rubber composition is the same. In addition, since when a Mooney viscosity of the unvulcanized rubber composition is increased, heat generation of the unvulcanized rubber composition at processing becomes great in some cases, a line speed was appropriately regulated so as to suppress increase in a Mooney viscosity.

<Measurement of rolling resistance>

Using each carcass of samples 1 to 5 prepared as described above, a passenger automobile tire of each of samples 1 to 5 having a 195/65R15 size was prepared. In passenger automobile tires of samples 1 to 5, the condition other than the carcass is the same.

Herein, a fundamental structure of the prepared passenger automobile tire is as follows.

Carcass

Cord angle 90 degree in tire circumferential direction
Cord material rayon 1840 dtex/2

Belt

Cord angle 24 degree x 26 degree in tire circumferential direction
Cord material steel (brass plating (copper zinc alloy plating))

JLB

Cord angle 0 degree in tire circumferential direction
Cord material steel cord 3x3x0.17

Each of passenger automobile tires of samples 1 to 5 prepared as described above was mounted on a regular rim (6JJx15), and measured for rolling resistance under the condition of an inner pressure of 230kPa, a speed per hour of 80km/h, and a load of 49N using rolling resistance testing machine manufactured by STL.

Thereafter, regarding each passenger automobile tire of samples 1 to 5, rolling resistance coefficient (RRC) obtained by dividing a measured value of rolling resistance by a load was calculated and, assuming a rolling resistance coefficient (RRC) of a passenger automobile tire of the sample 3 to be 100, a relative value was obtained. Results are shown in Table 1. A greater numerical value in a column of rolling resistance of Table 1 indicates that rolling resistance is smaller, and performance of the tire is better.

<Rubber strength>

Each of unvulcanized rubber compositions of the samples 1 to 5 was vulcanized at 170°C for 10 minutes to obtain each vulcanized rubber sheet of samples 1 to 5.

Regarding the vulcanized rubber sheet obtained as described above, a tensile test was performed using a dumbbell-like No. 3 shape test piece according to JIS K6251, and a modulus at breakage (TB) and an elongation at breakage (EB) were obtained. As an index of a rubber strength of each vulcanized rubber sheet of samples 1 to 5, a product of a modulus at breakage (TB) and an elongation at breakage (EB) was calculated. Results are shown in Table 1.

In a column of a rubber strength of Table 1, a greater numerical value indicates that a rubber strength is greater. In addition, at calculation of a product of a modulus at breakage (TB) and an elongation at breakage (EB), a unit of a modulus at breakage (TB) is MPa, and a unit of an elongation at breakage (EB) is %.

<Evaluation>

As shown in Table 1, when each of unvulcanized rubber compositions of samples 1 to 2 containing calcium stearate at not less than 1 part by mass and not more than 10 parts by mass based on 100 parts by mass of a natural rubber (NR) is used, even when a large amount of silica as a filler is incorporated at 60 parts by mass based on 100 parts by mass of a natural rubber (NR), rolling resistance of a passenger automobile tire is reduced and, at the same time, a rubber strength after vulcanization is excellent as compared with use of each of unvulcanized rubber compositions of samples 3 to 4 not containing calcium stearate and a sample 5 containing calcium stearate at 15 parts by mass based on 100 parts by mass of a natural rubber (NR), therefore, it is thought that durability of a tire also becomes excellent.

(Experimental Example 2)

<Production of unvulcanized rubber composition>

First, according to formulation shown in Table 2, materials other than sulfur and a vulcanization accelerator were supplied to a closed-type mixing machine, and the mixture was kneaded at 150°C for 3 minutes. Then, to the resulting kneaded product were added sulfur and a vulcanization accelerator, and the mixture was kneaded at 90°C for 3 minutes to obtain each unvulcanized rubber composition of samples 6 to 10.

In addition, a numerical value described in a column of other components of Table 2 indicates an amount of each component expressed in part by mass when assumed that an amount of a rubber component is to be 100 parts by mass to be 100.

Table 2

| | | Sample 6 | Sample 7 | Sample 8 | Sample 9 | Sample 10 |
|---|---|---|---|---|---|---|
| Rubber component | Diene-based rubber A (Note 12) | 0 | 0 | 30 | 0 | 0 |
| | Diene-based rubber B (Note 13) | 100 | 100 | 70 | 100 | 100 |

(continued)

|  | | Sample 6 | Sample 7 | Sample 8 | Sample 9 | Sample 10 |
|---|---|---|---|---|---|---|
| Other components | Carbon black [Note 14] | 0 | 0 | 50 | 0 | 0 |
| | Silica [Note 15] | 50 | 50 | 0 | 50 | 50 |
| | Process oil [Note 16] | 7 | 7 | 7 | 7 | 7 |
| | Stearic acid [Note 17] | 2 | 2 | 2 | 2 | 2 |
| | Calcium stearate [Note 18] | 1 | 10 | 0 | 0 | 15 |
| | Zinc oxide [Note 19] | 5 | 5 | 5 | 5 | 5 |
| | Silane coupling agent [Note 20] | 4 | 4 | 0 | 4 | 4 |
| | Sulfur [Note 21] | 3 | 3 | 3 | 3 | 3 |
| | Vulcanization accelerator [Note 22] | 1 | 1 | 1 | 1 | 1 |
| Evaluation | Rolling resistance | 107 | 109 | 100 | 103 | 100 |
| | Rubber strength | 7000 | 7500 | 6100 | 6450 | 6700 |

(Note 12) Diene-based rubber A: SBR1502 manufactured by JSR
(Note 13) Diene-based rubber B: TSR20 grade natural rubber (NR)
(Note 14) Carbon black: N339 manufactured by Mitsubishi Chemical Co., Ltd.
(Note 15) Silica: Z115GR manufactured by Rhodia (BET specific surface area: 112 $m^2$/g)
(Note 16) Process oil: Diana process PS32 manufactured by Idemitsu Kosan Co., Ltd.
(Note 17) Stearic acid: paulownia manufactured by NOF Corporation
(Note 18) Calcium stearate: GF200 manufactured by NOF Corporation
(Note 19) Zinc oxide: zinc oxide No. 1 manufactured by Mitsui Mining & Smelting Co., Ltd.
(Note 20) Silane coupling agent: Si75 manufactured by Degussa
(Note 21) Sulfur: Cristex HSOT20 manufactured by Flexis
(Note 22) Vulcanization accelerator: Nocceler NS (manufactured by Ouchishinko Chemical Industrial Co., Ltd.)

<Preparation of base tread>

Each of unvulcanized rubber compositions of samples 6 to 10 prepared as described above was processed into a thin film of 2 mm or less using a calendar roll to prepare each base tread of samples 6 to 10. In base treads of samples 6 to 10, the condition other than the unvulcanized rubber composition is the same.

<Measurement of rolling resistance>

Using each base tread of samples 6 to 10 prepared as described above, a passenger automobile tire of each of samples 6 to 10 having a 195/65R15 size was prepared. In passenger automobile tires of samples 6 to 10, the condition other than the base tread such as a cap tread and the like is the same.

Herein, a fundamental structure of the prepared passenger automobile tire is as follows.

Carcass

Cord angle 90 degree in tire circumferential direction
Cord material rayon 1840dtex/2

Belt

Cord angle 24 degree x 26 degree in tire circumferential direction
Cord material steel (brass plating (copper zinc alloy plating))

JLB

Cord angle 0 degree in tire circumferential direction
Cord material steel cord 3x3x0.17

Each of passenger automobile tires of samples 6 to 10 prepared as described above was mounted on a regular rim (6JJx15), and measured for rolling resistance under the condition of an inner pressure of 230 kPa, a speed per hour of 80 km/h, and a load of 49N using rolling resistance testing machine manufactured by STL.

Thereafter, regarding each passenger automobile tire of samples 6 to 10, rolling resistance coefficient (RRC) obtained by dividing a measured value of rolling resistance by a load was calculated and, assuming a rolling resistance coefficient (RRC) of a passenger automobile tire of the sample 8 to be 100, a relative value was obtained. Results are shown in Table 2. A greater numerical value in a column of rolling resistance of Table 2 indicates that rolling resistance is smaller, and performance of the tire is better.

<Rubber strength>

Each of unvulcanized rubber compositions of the samples 6 to 10 was vulcanized at 175°C for 10 minutes to obtain each vulcanized rubber sheet of samples 6 to 10.

Regarding the vulcanized rubber sheet obtained as described above, a tensile test was performed using a dumbbell-like No. 3 shape test piece according to JIS K6251, and a modulus at breakage (TB) and an elongation at breakage (EB) were obtained. As an index of a rubber strength of each vulcanized rubber sheet of samples 6 to 10, a product of a modulus at breakage (TB) and an elongation at breakage (EB) was calculated. Results are shown in Table 2.

In a column of a rubber strength of Table 2, a greater numerical value indicates that a rubber strength is greater. In addition, at calculation of a product of a modulus at breakage (TB) and an elongation at breakage (EB), a unit of a modulus at breakage (TB) is MPa, and a unit of an elongation at breakage (EB) is %.

<Evaluation>

As shown in Table 2, when each of unvulcanized rubber compositions of samples 6 and 7 containing calcium stearate at not less than 1 part by mass and not more than 10 parts by mass based on 100 parts by mass of a natural rubber (NR) is used, even when a large amount of silica as a filler is incorporated at 50 parts by mass based on 100 parts by mass of a natural rubber (NR), rolling resistance of a passenger automobile tire is reduced and, at the same time, a rubber strength after vulcanization is excellent as compared with use of each of unvulcanized rubber compositions of samples 8 and 9 not containing calcium stearate and a sample 10 containing calcium stearate at 15 parts by mass based on 100 parts by mass of a natural rubber (NR), therefore, it is thought that durability of a tire also becomes excellent.

(Experimental Example 3)

According to formulation shown in Table 3, components other than sulfur and a vulcanization accelerator were kneaded at 150°C for 6 minutes using a Banbury mixer to obtain the kneaded products. Then, to the resulting kneaded product were added sulfur and a vulcanization accelerator, and the mixture was kneaded at 80°C for 5 minutes using an open roll to obtain unvulcanized rubber composition samples 11 to 13. In addition, a numerical value shown in a column of other components in Table 3 indicates an amount of each component expressed in part by mass when assumed that an amount of a total rubber component is to be 100 parts by mass.

Table 3

|  |  | Sample 11 | Sample 12 | Sample 13 |
|---|---|---|---|---|
| Rubber component | Natural rubber (Note23) | 60 | 60 | 60 |
|  | Epoxidized natural rubber (Note 24) | 40 | 40 | 40 |

(continued)

|  |  | Sample 11 | Sample 12 | Sample 13 |
|---|---|---|---|---|
| Other components | Carbon black (Note 25) | 5 | 5 | 5 |
|  | Silica (Note 26) | 40 | 40 | 40 |
|  | Calcium stearate (Note 27) | 5 | 10 | 0 |
|  | Silane coupling agent (Note 28) | 3.2 | 3.2 | 3.2 |
|  | Oil (Note 29) | 12 | 10 | 15 |
|  | Wax (Note 30) | 1.5 | 1.5 | 1.5 |
|  | Aging preventing agent (Note 31) | 3 | 3 | 3 |
|  | Stearic acid (Note 32) | 1 | 1 | 2 |
|  | Zinc oxide (Note 33) | 3 | 3 | 3 |
|  | Sulfur (Note 34) | 2 | 2 | 2 |
|  | Vulcanization accelerator NS (Note 35) | 1 | 1 | 1 |
| Evaluation | Extrusion processability | 110 | 120 | 100 |
|  | Post thermal aging rubber strength index | 115 | 125 | 100 |

(Note 23) Natural rubber: RSS#3
(Note 24) Epoxidized natural rubber: manufactured by Malaysian Rubber Board (epoxidization rate: 25 mole%)
(Note 25) Carbon black: Diablack I manufactured by Mitsubishi Chemical Co., Ltd.
(Note 26) Silica: Ultrasil VN3 manufactured by Degussa
(Note 27) Calcium stearate: calcium stearate GF-200 manufactured by NOF Corporation
(Note 28) Silane coupling agent: Si266 manufactured by Degussa
(Note 29) Oil: Nissin soybean white root oil (s) manufactured by The Japan OilliO Group, Ltd.
(Note 30) Wax: Ozoace 0355 manufactured by NIPPON SEIRO CO., LTD.
(Note 31) Aging preventing aging: Suntoflex 6PPD manufactured by Flexis.
(Note 32) Stearic acid: beads stearic acid Camellia manufactured by NOF Corporation
(Note 33) Zinc oxide: zinc oxide second kind manufactured by Mitsui Mining & Smelting Co., Ltd.
(Note 34) Sulfur: powdery sulfur manufactured by Tsurumi Chemical Industry Co., Ltd.
(Note 35) Vulcanization accelerator NS: Nocceler NS-G (manufactured by Ouchishinko Chemical Industrial Co., Ltd.)

<Extrusion processability>

Each of unvulcanized rubber composition samples 11 to 13 obtained as described above was extruded with a labo extruder to obtain a rubber sheet. A shape of inherent quality of each of the resulting rubber sheets was conformed visually. Results are shown in Table 3.
In addition, extrusion processability is expressed as a relative value, assuming the state of an edge of the rubber sheet of a sample 13 to be 100. In a column of extrusion processability of Table 3, the better state of the edge indicates a higher numerical value.

<Rubber strength after thermal aging>

Each of unvulcanized rubber compositions of samples 11 to 13 obtained as described above was vulcanized at 150°C for 30 minutes to obtain each vulcanized rubber sheet of samples 11 to 13.
Then, vulcanized rubber sheets of samples 11 to 13 obtained as described above were thermally aged under the condition of 100°C and 48 hours, a No. 3 dumbbell-type test piece was prepared from vulcanized rubber sheets of samples 11 to 13, respectively, a tensile test was performed according to JIS-K6251 "Vulcanized rubber and thermoplastic rubber-how to obtain tensile property", a breakage strength (TB) and an elongation at breakage (EB) of a test piece were measured, and a post-thermal aging rubber strength index was calculated by the following equation (1), thereby, a rubber strength after thermal aging was evaluated. Results are shown in Table 3. A greater numerical value in a column of post-thermal aging rubber strength index of Table 3 indicates that a rubber strength after thermal aging is higher.

$$\text{Post-aging rubber strength index} = 100 \times \{(TB \times EB) \text{ of each of samples } 11 \text{ to } 13\} / \{(TB \times EB) \text{ of sample } 13\} \quad \text{--- (1)}$$

<Evaluation>

As apparent from results shown in Table 3, unvulcanized rubber compositions of samples 11 and 12 containing 40 parts by mass of silica, and 5 parts by mass and 10 parts by mass of calcium stearate, respectively, based on 100 parts by mass of the rubber component exhibit better extrusion processability at unvulcanization as compared with an unvulcanized rubber composition of the sample 13 not containing calcium stearate, resulting in suppression of reduction in a rubber strength after thermal aging after vulcanization.

From the above results, unvulcanized rubber compositions of samples 11 and 12 have high processability at unvulcanization, and can also suppress reduction in a rubber strength after thermal aging after vulcanization. Therefore, unvulcanized rubber compositions of samples 11 and 12 are preferably used in forming a side wall of a tire and, when a side wall of a tire is formed using these unvulcanized rubber compositions, it is thought that a life of a tire can be prolonged and, at the same time, operation stability of a vehicle is improved.

In addition, since unvulcanized rubber compositions of samples 11 and 12 are such that a used amount of carbon black is remarkably reduced as compared with the previously used amount, a used amount of a component derived from a petroleum source can be also reduced.

(Experimental Example 4)

<Preparation of unvulcanized rubber composition>

According to formulation shown in Table 4, components other than sulfur and the vulcanization accelerator were kneaded at 150°C for 6 minutes using a Banbury mixer to obtain the kneaded product. Then, to the resulting kneaded product were added sulfur and a vulcanization accelerator, and the mixture was kneaded at 80°C for 5 minutes using an open roll to obtain unvulcanized rubber compositions of samples 14 to 19. A numerical value shown in a column of other components of Table 4 indicates an amount of each component expressed in part by mass when assumed that an amount of a rubber component is to be 100 parts by mass.

Table 4

|  |  | Sample 14 | Sample 15 | Sample 16 | Sample 17 | Sample 18 | Sample 19 |
|---|---|---|---|---|---|---|---|
| Rubber component | Natural rubber [Note 36] | 100 | 100 | 80 | 100 | 100 | 100 |
|  | Epoxidized natural rubber [Note 37] | 0 | 0 | 20 | 0 | 0 | 0 |

(continued)

| | | Sample 14 | Sample 15 | Sample 16 | Sample 17 | Sample 18 | Sample 19 |
|---|---|---|---|---|---|---|---|
| Other components | Calcium stearate (Note 38) | 2 | 5 | 10 | 0 | 0.5 | 15 |
| | Carbon black (Note 39) | 5 | 5 | 5 | 5 | 5 | 5 |
| | Silica (Note 40) | 60 | 60 | 60 | 60 | 60 | 60 |
| | Silane coupling agent (Note 41) | 4.8 | 4.8 | 4.8 | 4.8 | 4.8 | 4.8 |
| | Wax (Note 42) | 1.2 | 1.2 | 1.2 | 1.2 | 1.2 | 1.2 |
| | Aging preventing agent (Note 43) | 2.4 | 2.4 | 2.4 | 2.4 | 2.4 | 2.4 |
| | Stearic acid (Note 44) | 1 | 1 | 1 | 2 | 1 | 1 |
| | Zinc oxide (Note 45) | 3 | 3 | 3 | 3 | 3 | 3 |
| | Sulfur (Note 46) | 2 | 2 | 2 | 2 | 2 | 2 |
| | Vulcanization accelerator NS (Note 47) | 2 | 2 | 2 | 2 | 2 | 2 |
| Evaluation | Extrusion processability | A | A | A | B | B | A |
| | High severity resistance | 100 | 105 | 105 | 90 | 90 | 103 |
| | Rubber strength | 100 | 100 | 100 | 100 | 100 | 85 |

(Note 36) Natural rubber: RSS#3
(Note 37) Epoxidized natural rubber: manufactured by Malaysian Rubber Board (Expoxidization rate: 25 mole%)
(Note 38) Calcium stearate: calcium stearate GF-200 manufactured by NOF Corporation
(Note 39) Carbon black: Diablack I manufactured by Mitsubishi Chemical Co., Ltd.
(Note 40) Silica: Ultrasil VN3 manufactured by Degussa
(Note 41) Silane coupling agent: Si266 manufactured by Degussa
(Note 42) Wax: Ozoace 0355 manufactured by NIPPON SEIRO CO., LTD.
(Note 43) Aging preventing aging: Suntoflex 6PPD manufactured by Flexiys Co.
(Note 44) Stearic acid: beads stearic acid Camellia manufactured by NOF Corporation
(Note 45) Zinc oxide: zinc oxide second kind manufactured by Mitsui Mining & Smelting Co., Ltd.
(Note 46) Sulfur: Mucrone OT-20 manufactured by SHIKOKU CHEMICALS CORPORATION.
(Note 47) Vulcanization accelerator NS: Nocceler NS-G (manufactured by Ouchishinko Chemical Industrial Co., Ltd.)

<Extrusion processability>

Each unvulcanized rubber composition of samples 14 to 19 obtained described above was extruded with a labo extruder to obtain a rubber sheet. Then, a shape of inherent quality of the resulting each rubber sheet was conformed visually. Results are shown in Table 4.

In a column of extrusion processability of Table 4, a sample which does not cause border breakage, and is determined not to be problematic in processability is expressed by A, and a sample which causes border breakage, and is determined to be problematic in processability is expressed by B.

<High severity abrasion resistance>

Each unvulcanized rubber composition of samples 14 to 19 obtained as described above was vulcanized at 150°C for 30 minutes to obtain each vulcanized rubber sheet of samples 14 to 19.

Then, according to JIS-K6264 "Vulcanized rubber and thermoplastic rubber-how to obtain abrasion resistance", vulcanized rubber sheets of samples 14 to 19 obtained as described above were abraded with a pico-abrasion testing machine manufactured by Ueshima Seisakusho Co., Ltd., a change in a weight of each vulcanized rubber test piece before and after a test was measured, and a pico-abrasion index calculated by the following equation (2), thereby, high severity abrasion resistance was evaluated. Results are shown in Table 4. A greater numerical value in a column of a high severity abrasion resistance of Table 4 indicates that a high severity abrasion resistance is higher.

$$\text{Pico-abrasion index} = 100 \times \{\text{change in weight of each of samples 14 to 19}\}/\{\text{change in weight of sample 14}\} \text{ ---(2)}$$

<Rubber strength>

From vulcanized rubber sheets of samples 14 to 19 obtained described above, a No. 3 dumbbell-type test piece was prepared, a tensile test was performed according to JIS-K6251 "Vulcanized rubber and thermoplastic rubber-how to obtain tensile property", a breakage strength (TB) and an elongation at breakage (EB) of a test piece were measured, and a rubber strength index was calculated by the following equation (3), thereby, a rubber strength was evaluated. Results are shown in Table 4. A greater numerical value in a column of rubber strength of Table 4 indicates a rubber strength is higher.

$$\text{Rubber strength index} = 100 \times \{(TB \times EB) \text{ of each of samples 14 to 19}\}/\{(TB \times EB) \text{ of sample 17}\} \text{ ---(3)}$$

<Evaluation>

As apparent from results shown in Table 4, unvulcanized rubber compositions of samples 14 to 16 containing 60 parts by mass of silica, and not less than 2 parts by mass and not more than 10 parts by mass of calcium stearate based by 100 parts by mass of the rubber component have better extrusion processability, resulting in increase in high severity abrasion resistance and a rubber strength after vulcanization.

On the other hand, since an unvulcanized rubber composition of the sample 17 does not contain calcium stearate, extrusion processability is inferior. Since an unvulcanized rubber composition of the sample 18 contains calcium stearate but a content is small as 0.5 part by mass based on the rubber component, extrusion processability was inferior.

Further, since an unvulcanized rubber composition of the sample 19 contains calcium stearate at 15 parts by mass based on 100 parts by mass of the rubber component, there is a tendency that rubber strength is reduced.

From the above results, since unvulcanized rubber compositions of samples 14 to 16 have high processability at unvulcanization, and have high abrasion resistance and a high strength after vulcanization, they are preferably used in forming a clinch of a tire, and it is thought that they can reduce occurrence abrasion between a rim and a bead wire of a tire.

In addition, since unvulcanized rubber compositions of the samples 14 to 16 are such that a used amount of carbon black is remarkably reduced than the previous used amount, a used amount of a component derived from a petroleum source can be also reduced.

(Experimental Example 5)

<Preparation of unvulcanized rubber composition>

According to formulation shown in Table 5, components other than sulfur and a vulcanization accelerator were kneaded at 150°C for 6 minutes using a Banbury mixer to obtain the kneaded product. Then, to the kneaded product were added sulfur and a vulcanization accelerator using an open roll, the mixture was kneaded at 80°C for 5 minutes, and formulated into a sheet, thereby, each of unvulcanized sheets (thickness 2 mm) made of unvulcanized rubber compositions of samples 20 to 26 was prepared. A numerical value shown in a column of other components of Table 5 indicates an amount of each component expressed in part by mass when assumed that an amount of a rubber component made of a mixed rubber ofNR and ENR is to be 100 parts by mass.

Table 5

|  |  | Sample 20 | Sample 21 | Sample 22 | Sample 23 | Sample 24 | Sample 25 | Sample 26 |
|---|---|---|---|---|---|---|---|---|
| Rubber component | NR (Note 48) | 60 | 60 | 60 | 60 | 60 | 60 | 60 |
|  | ENR (Note 49) | 40 | 40 | 40 | 40 | 40 | 40 | 40 |
| Other components | Carbon black (Note 50) | 5 | 5 | 5 | 5 | 5 | 5 | 5 |
|  | Silica (Note 51) | 50 | 50 | 50 | 50 | 50 | 50 | 50 |
|  | Calcium stearate (Note 52) | 1 | 5 | 10 | 0.5 | 0 | 0 | 12 |
|  | Silane coupling agent (Note 53) | 4 | 4 | 4 | 4 | 4 | 4 | 4 |
|  | Oil (Note 54) | 12 | 10 | 10 | 12 | 15 | 15 | 10 |
|  | Aging preventing agent (Note 55) | 1.5 | 1.5 | 1.5 | 1.5 | 1.5 | 1.5 | 1.5 |
|  | Stearic acid (Note 56) | 1 | 1 | 1 | 1 | 2 | 10 | 1 |
|  | Zinc white (Note 57) | 3 | 3 | 3 | 3 | 5 | 3 | 3 |
|  | Sulfur (Note 58) | 3 | 3 | 3 | 3 | 3 | 3 | 3 |
|  | Vulcanization accelerator (Note 59) | 3 | 3 | 3 | 3 | 3 | 3 | 3 |

(continued)

|  |  | Sample 20 | Sample 21 | Sample 22 | Sample 23 | Sample 24 | Sample 25 | Sample 26 |
|---|---|---|---|---|---|---|---|---|
| Evaluation | Rubber strength after thermal aging test | 115 | 125 | 120 | 113 | 100 | 80 | 118 |
|  | Covering rate (%) after peeling test | 100 | 100 | 100 | 100 | 80 | 60 | 95 |

(Note 48) Natural rubber (NR): RSS#3
(Note 49) Epoxidized natural rubber (ENR): ENR-25 manufactured by Malaysian Rubber Board (epoxidization rate: 25 mole%)
(Note 50) N220: Diablack I manufactured by Mitsubishi Chemical Co., Ltd.
(Note 51) Ultrasil VN3 (BET: 175 m$^2$/g) manufactured by Degussa
(Note 52) Calcium stearate GF-200 manufactured by NOF Corporation
(Note 53) Si266 manufactured by Degussa
(Note 54) Vegetable oil: Nissin soybean white root oil (S) manufactured by The Japan OilliO Group, Ltd.
(Note 55) Antioxidant FR manufactured by Matsubarasangyo
(Note 56) Beads stearic acid Camellia manufactured by NOF Corporation
(Note 57) Zinc oxide: zinc oxide second kind manufactured by Mitsui Mining & Smelting Co., Ltd.
(Note 58) Sulfur: Mucrone OT-20 manufactured by SHIKOKU CHEMICALS CORPORATION.
(Note 59) Suncellar CM-G manufactured by SANSHIN CHEMICAL INDUSTRY CO., LTD.

<Thermal aging test>

Each unvulcanized rubber sheet of samples 20 to 26 was press-vulcanized at 150°C for 30 minutes to obtain a sample for a thermal aging test of each of samples 20 to 26.
Then, each sample for a thermal aging test of samples 20 to 26 was thermally aged by allowing to stand at 100°C for 48 hours, a tensile test was performed based on JIS K6251, an elongation at breakage (EB) and a tensile strength at breakage (TB) of each sample for a thermal aging test were measured, a destruction energy (EBxTB/2) was calculated from these measured values, and this destruction energy was adopted as rubber strength after a thermal aging test. Results are shown in Table 5.
Herein, in a column of a rubber strength after a thermal aging test of Table 5, a rubber strength after a thermal aging test of each sample for a thermal aging test of samples 20 to 26 is expressed by a relative value, assuming a rubber strength (destruction energy) after a thermal aging test of a vulcanized rubber of the sample 24 to be 100.
Herein, a greater value of a rubber strength after a thermal aging test indicates that reduction in a rubber strength due to thermal aging can be suppressed.
In addition, it goes without saying that, regarding samples for a thermal aging test of samples 20 to 26, a thermal aging test was performed by the same method and under the same condition.

<Peeling test>

Each of unvulcanized rubber sheets of samples 20 to 26 was applied to upper and lower surfaces of rayon cords arranged at an equal interval, pressed and press-vulcanized at 150°C for 30 minutes to prepare a sample for a peeling test of samples 20 to 26.
Then, a notch having a width of 25 mm was applied to a surface of a sample for a peeling test of samples 20 to 26, and this was peeled with a tensile testing machine at a tensile rate of 50 mm/min.
Then, a potion of an outer circumferential surface of a rayon cord covered with a rubber after the peeling was calculated as a covering rate (%) after a peeling test (a covering rate 100% indicates that a whole outer circumferential surface of a rayon cord is covered with a rubber). Results are shown in Table 5.
Herein, a greater value of a covering rate (%) after a peeling test indicates that adhesion properties with a rayon cord is excellent.
It goes without saying that, regarding samples for a peeling test of samples 20 to 26, a peeling test was performed by the same method under the same condition in all cases.

<Test results>

As apparent from results shown in Table 5, samples obtained by vulcanizing unvulcanized rubber compositions of samples 20 to 23 in which a content of carbon black is suppressed to 5 parts by mass, a content of silica is 50 parts by mass, and a content of calcium stearate is not less than 0.5 part by mass and not more than 10 parts by mass based on 100 parts by mass of a rubber component ofNR and ENR are excellent in both of a rubber strength after a thermal aging test and a covering rate after a peeling test as compared with samples obtained by vulcanizing unvulcanized rubber compositions of samples 24 and 25 not containing calcium stearate, and a sample obtained by vulcanizing an unvulcanized rubber composition of the samples 26 containing 12 parts by mass of calcium stearate.

Therefore, from the above results, it is thought that when JLB is prepared using unvulcanized rubber compositions of samples 20 to 23 is prepared, JLB excellent in the function of suppressing floating a belt at vehicle running is obtained as compared with the case where JLB is prepared using unvulcanized rubber compositions of samples 24 to 26.

In addition, samples obtained by vulcanizing unvulcanized rubber compositions of samples 20 to 22 in which a content of calcium stearate is not less than 1 part by mass and not more than 10 parts by mass based on 100 parts by mass of the rubber component are excellent in a rubber strength after a thermal aging test as compared with the sample obtained by vulcanizing an unvulcanized rubber composition of the sample 23 in which a content of calcium stearate is 0.5 part by mass based on 100 parts by mass of the rubber component.

Therefore, it is thought that when JLB is prepared using unvulcanized rubber compositions of samples 20 to 22, JLB excellent in the function of suppressing floating of a belt at vehicle running is obtained as compared with the case where JLB is prepared using an unvulcanized rubber composition of the sample 23.

Further, samples obtained by vulcanizing unvulcanized rubber compositions of samples 21 and 22 in which a content of calcium stearate is not less than 5 parts by mass and not more than 10 parts by mass based on 100 parts by mass of the rubber component are excellent in a rubber strength after a thermal aging test as compared with a sample obtained by vulcanizing an unvulcanized rubber composition of the sample 20 in which a content of calcium stearate is 1 part by mass based on 100 parts by mass of the rubber component.

Therefore, it is thought that when JLB is prepared using unvulcanized rubber compositions of samples 21 to 22, JLB excellent in the function of suppressing floating of a belt at vehicle running is obtained as compared with the case where JLB is prepared using an unvulcanized rubber composition of the sample 20.

(Experimental Example 6)

<Preparation of unvulcanized rubber composition>

According to formulation shown in Table 6, components other than sulfur and a vulcanization accelerator were kneaded at 150°C for 6 minutes using a Banbury mixer to obtain the kneaded product. Then, to the resulting kneaded product were added sulfur and a vulcanization accelerator, and the mixture was kneaded at 80°C for 5 minutes using an open roll to obtain each unvulcanized rubber composition of samples 27 to 33. A numerical value shown in a column of other components of Table 6 is an amount of each component expressed in part by mass, assuming a rubber component made ofNR to be 100 parts by mass.

Table 6

| | | Sample 27 | Sample 28 | Sample 29 | Sample 30 | Sample 31 | Sample 32 | Sample 33 |
|---|---|---|---|---|---|---|---|---|
| Rubber component | NR (Note 60) | 100 | 100 | 100 | 100 | 100 | 100 | 100 |

(continued)

| | | Sample 27 | Sample 28 | Sample 29 | Sample 30 | Sample 31 | Sample 32 | Sample 33 |
|---|---|---|---|---|---|---|---|---|
| Other components | Carbon black (Note 61) | 2 | 2 | 2 | 2 | 2 | 2 | 2 |
| | Silica (Note 62) | 65 | 65 | 65 | 65 | 65 | 65 | 65 |
| | Silane coupling agent (Note 63) | 5.2 | 5.2 | 5.2 | 5.2 | 5.2 | 5.2 | 5.2 |
| | Calcium stearate (Note 64) | 2 | 5 | 10 | 0 | 0 | 0.5 | 12 |
| | Stearic acid (Note 65) | 1 | 1 | 1 | 2 | 10 | 1 | 1 |
| | Zinc white (Note 66) | 4 | 4 | 4 | 4 | 4 | 4 | 4 |
| | PR12686 resin (Note 67) | 10 | 10 | 10 | 10 | 10 | 10 | 10 |
| | Sulfur (Note 68) | 3 | 3 | 3 | 3 | 3 | 3 | 3 |
| | Vulcanization accelerator CZ (Note 69) | 3 | 3 | 3 | 3 | 3 | 3 | 3 |
| | Vulcanization accelerator H (Note 70) | 1 | 1 | 1 | 1 | 1 | 1 | 1 |
| Evaluation | Mooney viscosity | 95 | 90 | 80 | 100 | 95 | 98 | 77 |
| | Extrusion processability | | 4 | 5 | 2 1 | 5 | 1 | 5 |
| | Hardness (durometer hardness) | A85 | A84 | A82 | A85 | A80 | A85 | A80 |
| | Thermal aging resistance | 105 | 108 | 103 | 100 | 73 | 100 | 100 |

(Note 60) Natural Rubber (NR): RSS#3
(Note 61) N220: Diablack I manufactured by Mitsubishi Chemical Co., Ltd.
(Note 62) Ultrasil VN3 (BET: 175 m$^2$/g) manufactured by Degussa
(Note 63) Si266 manufactured by Degussa
(Note 64) Calcium stearate GF-200 manufactured by NOF Corporation
(Note 65) Beads stearic acid Camellia manufactured by NOF Corporation
(Note 66) Zinc oxide: zinc oxide second kind manufactured by Mitsui Mining & Smelting Co., Ltd.
(Note 67) Sumilite resin PR12686R manufactured by SUMITOMO BAKELITE Co., Ltd.
(Note 68) Sulfur: Mucrone OT-20 manufactured by SHIKOKU CHEMICALS CORPORATION.
(Note 69) Suncellar CM-G manufactured by SANSHIN CHEMICAL INDUSTRY CO., LTD.
(Note 70) Suncellar H-T manufactured by SANSHIN CHEMICAL INDUSTRY CO., LTD.

<Mooney viscosity>

Regarding each unvulcanized rubber composition of samples 27 to 33, a Mooney viscosity was measured based on JIS K6300. Results are shown in Table 6.

A greater numerical value in a column of a Mooney viscosity of Table 6 indicates that a Mooney viscosity is higher.

<Extrusion processability>

Regarding each unvulcanized rubber composition of samples 27 to 33, extrusion molding was performed using a molding extruder, and the edge state of a molded article obtained by molding each unvulcanized rubber composition of samples 27 to 33 after extrusion into a shape of a predetermined bead apex was evaluated visually. Results are shown in Table 6.

In addition, in Table 6, evaluation of extrusion processability was performed at five stages 1 to 5, the state where least edge is present was 5, and the state where most edge is present was 1. Therefore, a greater numerical value in a column of extrusion processability of Table 1 indicates that extrusion processability is excellent.

<Hardness>

Each unvulcanized rubber composition of samples 27 to 33 was formulated into a sheet to prepare an unvulcanized rubber sheet and, thereafter, each unvulcanized rubber sheet was press-vulcanized at 150°C for 30 minutes, thereby, each vulcanized rubber sheet of samples 27 to 33 was prepared.

Then, regarding vulcanized rubber sheets of the above-prepared samples 27 to 33, a durometer hardness was measured based on JIS K6253. Results are shown in Table 6. A greater numerical value in a column of a hardness of Table 6 indicates that a durometer hardness is higher.

<Thermal aging resistance>

After each vulcanized rubber sheet of samples 27 to 33 was allowed to stand at 100°C for 48 hours to thermally age, a tensile test was performed based on JIS K6251, an elongation at breakage (EB) and a tensile strength at breakage (TB) of each vulcanized rubber sheet of samples 27 to 33 were measured, a destruction energy (EBxTB/2) was calculated from these measured values, and this destruction energy was adopted as an index of thermal aging resistance. Results are shown in Table 6.

Herein, in a column of a thermal aging resistance of Table 6, each numerical value of samples 27 to 33 is expressed by a relative value, assuming the destruction energy of the sample 30 to be 100.

A greater numerical value in a column of a thermal aging resistance of Table 6 indicates that a thermal aging resistance is excellent.

<Evaluation>

As apparent from results shown in Table 6, unvulcanized rubber compositions of samples 27 to 29 in which a content of carbon black is suppressed to 2 parts by mass, a content of silica is 65 parts by mass, and a content of calcium stearate is not less than 2 parts by mass and not more than 10 parts by mass based on 100 parts by mass of the rubber component made ofNR have a low Mooney viscosity, and excellent extrusion processability as compared with an unvulcanized rubber composition of the sample 30 not containing calcium stearate.

In addition, as apparent from results shown in Table 6, vulcanized rubber sheets of samples 27 to 29 obtained by vulcanizing respective unvulcanized rubber compositions of samples 27 to 29 in which a content of carbon black is suppressed to 2 parts by mass, a content of silica is 65 parts by mass, and a content of calcium stearate is not less than 2 parts by mass and not more than 10 parts by mass based on 100 parts by mass of the rubber component made ofNR have a greater hardness, and remarkably excellent thermal aging resistance as compared with a vulcanized rubber sheet of the sample 31 obtained by vulcanizing an unvulcanized rubber composition of the sample 31 not containing calcium stearate.

In addition, as apparent from results shown in Table 6, unvulcanized rubber compositions of samples 27 to 29 in which a content of carbon black is suppressed to 2 parts by mass, a content of silica is 65 parts by mass, and a content of calcium stearate is not less than 2 parts by mass and not more than 10 parts by mass based on 100 parts by mass of the rubber component made ofNR are more excellent in extrusion processability and, after vulcanization, are more excellent in thermal aging resistance than an unvulcanized rubber composition of the sample 32 in which a content of calcium stearate is 0.5 part by mass based on 100 parts by mass of the rubber component made ofNR.

In addition, as apparent from results shown in Table 6, vulcanized rubber sheets of samples 27 to 29 obtained by vulcanizing respective unvulcanized rubber compositions of samples 27 to 29 in which a content of carbon black is suppressed to 2 parts by mass, a content of silica is 65 parts by mass, and a content of calcium stearate is not less than 2 parts by mass and not more than 10 parts by mass based on 100 parts by mass of the rubber component made ofNR have a high hardness, and are excellent in a thermal aging resistance as compared with a vulcanized rubber sheet of the sample 33 obtained by vulcanizing an unvulcanized rubber composition of the sample 33 in which a content of calcium stearate is 12 parts by mass based on 100 parts by mass of the rubber component made of NR.

Therefore, from the above results, it is thought that, when a bead apex is prepared using unvulcanized rubber compositions of samples 27 to 29, as compared with the case where the bead apex is prepared using unvulcanized rubber compositions of samples 30 to 33, a variation in a molded shape and properties of the bead apex can be reduced, and operation stability of a tire during long-term running vehicle can be improved.

In addition, since the rubber composition of the sample 30 had a too high Mooney viscosity, border breakage occurred at the extrusion molding.

In addition, a vulcanized rubber sheet of the sample 31 obtained by vulcanizing a rubber composition of the sample 31 had a low hardness, and was considerably inferior in a thermal aging resistance as compared with vulcanized rubber sheets of samples 27 to 29.

In addition, the rubber composition of the sample 32 had worse extrusion processability and, after vulcanization, had a deteriorated thermal aging resistance as compared with rubber compositions of samples 27 to 29.

In addition, a vulcanized rubber sheet of the sample 33 obtained by vulcanizing a rubber composition of the sample 33 had a low hardness, and was inferior in a thermal aging resistance as compared with vulcanized rubber sheets of samples 27 to 29.

Further, unvulcanized rubber compositions of samples 28 to 29 in which a content of calcium stearate is in a range of not less than 5 parts by mass and not more than 10 parts by mass based on 100 parts by mass of the rubber component were considerably excellent in extrusion processability as compared with an unvulcanized rubber composition of the sample 27 in which a content of calcium stearate is not in that range.

According to the present invention, a rubber composition for covering a carcass cord which can reduce a used amount of a material derived from a petroleum source and, at the same time, can make rolling resistance of a tire and durability of a tire excellent, a carcass and a tire produced using a rubber composition for covering a carcass cord as well as a process for producing a tire can be provided.

According to the present invention, a rubber composition for a base tread which can reduce a used amount of a material derived from a petroleum source and, at the same time, can make rolling resistance of a tire and durability of a tire excellent, as well as a base tread and a tire produced using a rubber composition for a base tread can be provided.

According to the present invention, a rubber composition for forming a side wall of a tire, which can suppress a used amount of a component derived from a petroleum source, and is better in processability at unvulcanization and can suppress reduction in a rubber strength after thermal aging after vulcanization, as well as a side wall and a tire formed using the rubber composition can be provided.

According to the present invention, a rubber composition for forming a clinch of a tire, which can suppress a used amount of a component derived from a petroleum source, and is better in processability at unvulcanization, and can realize a rubber having a high abrasion resistance and a high strength after vulcanization, as well as a clinch and a tire formed using the rubber composition can be provided.

According to the present invention, a rubber composition for JLB, JLB and a tire, which can suppress reduction in a rubber strength due to thermal aging and, at the same time, can improve adhesion properties between a rubber and a cord, further, suppress a used amount of a component derived from a petroleum source can be provided.

According to the present invention, a rubber composition for a bead apex, a bead apex, and a tire which can suppress a used amount of a component derived from a petroleum source and, at the same time, is excellent in a molding processability, and can enhance a thermal aging resistance and a hardness of a bead apex after vulcanization can be provided.

Although the present invention has been described and illustrated in detail, it is clearly understood that the same is by way of illustration and example only and is not to be taken by way of limitation, the scope of the present invention being interpreted by the terms of the appended claims.

**Claims**

1. A rubber composition for a tire, comprising a rubber component containing at least one of a natural rubber and an epoxidized natural rubber, not less than 15 parts by mass of silica based on 100 parts by mass of said rubber component, and not less than 0.5 part by mass of calcium stearate based on 100 parts by mass of said rubber component.

**2.** The rubber composition for a tire according to claim 1, wherein said rubber composition for a tire is a rubber composition for covering a carcass cord, a content of said silica is not less than 60 parts by mass and not more than 80 parts by mass based on 100 parts by mass of said rubber component, a content of said calcium stearate is not less than 1 part by mass and not more than 10 parts by mass based on 100 parts by mass of said rubber component, and the composition further comprises at not less than 1 part by mass and not more than 15 parts by mass of a silane coupling agent based on 100 parts by mass of said rubber component.

**3.** The rubber composition for a tire according to claim 1, wherein said rubber composition for a tire is a rubber composition for a base tread, a content of said silica is not less than 25 parts by mass and not more than 80 parts by mass based on 100 parts by mass of said rubber component, a content of said calcium stearate is not less than 1 part by mass and not more than 10 parts by mass based on 100 parts by mass of said rubber component, and the composition further comprises at not less than 1 part by mass and not more than 15 parts by mass of a silane coupling agent based on 100 parts by mass of said rubber component.

**4.** The rubber composition for a tire according to claim 1, wherein said rubber composition for a tire is a rubber composition for a side wall, a content of said silica is not less than 15 parts by mass and not more than 60 parts by mass based on 100 parts by mass of said rubber component, and a content of said calcium stearate is not less than 2 parts by mass based on 100 parts by mass of said rubber component.

**5.** The rubber composition for a tire according to claim 1, wherein said rubber composition for a tire is a rubber composition for a clinch, a content of said silica is not less than 60 parts by mass based on 100 parts by mass of said rubber component, and a content of said calcium stearate is not less than 2 parts by mass and not more than 10 parts by mass based on 100 parts by mass of said rubber component.

**6.** The rubber composition for a tire according to claim 1, wherein said rubber composition for a tire is a rubber composition for a jointless band, a content of said silica is not less than 40 parts by mass based on 100 parts by mass of said rubber component, and a content of said calcium stearate is not less than 0.5 part by mass and not more than 10 parts by mass based on 100 parts by mass of said rubber component.

**7.** The rubber composition for a tire according to claim 1, wherein said rubber composition for a tire is a rubber composition for a bead apex, a content of said silica is not less than 60 parts by mass based on 100 parts by mass of said rubber component, and a content of said calcium stearate is not less than 2 parts by mass and not more than 10 parts by mass based on 100 parts by mass of said rubber component.

**8.** A tire member formed using the rubber composition for a tire according to claim 1.

**9.** A tire produced using the tire member according to claim 8.

FIG.1

FIG.2

**FIG.3**

**FIG.4**

FIG.5

FIG.6

FIG.7

71

62

67

66

63

69

68

64

65

CO

FIG.8

81

62

67

66

63

69

68

64

65

CO

FIG.9

FIG.10

FIG.11

FIG.12

FIG.13

FIG.14

FIG.15

154a                                                    154a

155  157  154b                154                154b  157  155

FIG.16

154

157          154b                      154b          157
154a                                                 154a
155                                                  155

## FIG.17

## FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007168699 A
- JP 2007168700 A
- JP 2007168701 A
- JP 2007168702 A
- JP 2007173946 A

- JP 2007174018 A
- JP 2006328194 A
- JP 2006199784 A
- JP 2004339287 A
- JP 2003063206 A